# EUROPEAN PATENT SPECIFICATION

(11) **EP 3 487 951 B1**
(45) Date of publication and mention of the grant of the patent: **30.09.2026**
(21) Application number: 17742933.9
(22) Date of filing: 17.07.2017
(51) Int. Cl.: C09K 8/66, C09K 8/68, C09K 8/80, C09K 8/84, C09K 8/86, C09K 8/88, E21B 43/25, E21B 43/267

(54) **METHOD OF ENHANCING FRACTURE COMPLEXITY USING FAR-FIELD DIVERT SYSTEMS**
VERFAHREN ZUR VERBESSERUNG DER FRAKTURKOMPLEXITÄT UNTER VERWENDUNG VON FERNFELDABLENKUNGSSYSTEMEN
PROCÉDÉ D'AMÉLIORATION DE LA COMPLEXITÉ DES FRACTURES À L'AIDE DE SYSTÈMES DE DÉVIATION EN CHAMP LOINTAIN

(30) Priority: 22.07.2016 US 201615217684
(43) Date of publication of application: 29.05.2019
(73) Proprietor: Baker Hughes Holdings LLC, Houston, TX 77073 (US)
(72) Inventor: BESTAOUI-SPURR, Naima, The Woodlands, Texas 77381 (US); GOMAA, Ahmed M., Katy, Texas 77494 (US); HUDSON, Harold Gene, The Woodlands, Texas 77381 (US); GUPTA, D.V. Satyanarayana, The Woodlands, Texas 77382 (US); NELSON, Scott Gregory, Cypress, Texas 77433 (US); BRANNON, Harold Dean, Magnolia, Texas 77354 (US)
(74) Representative: Novagraaf Group
(86) International application number: PCT/US2017/042397
(87) International publication number: WO 2018/017482

(56) References cited:
- WO-A1-2016/025936
- US-A1- 2015 041 132

## Description

### Field of the Disclosure

The invention relates to use of a diversion system to enhance the production of hydrocarbons from high permeability zones of a fracture network near a wellbore and far field from the wellbore. The diversion system contains a mixture of a dissolvable diverter and proppant. When used far field from the wellbore, both the dissolvable diverter and the proppant of the diversion system are of defined particle sizes and the apparent specific gravity of the proppant is greater than or equal to 1.05.

### Background of the Disclosure

Common stimulation techniques used to enhance production of hydrocarbon fluids from subterranean formations including hydraulic fracturing and acidizing. Typically a fracturing treatment fluid is injected into the formation at a pressure sufficiently high to cause the formation to fracture providing with a pathway for hydrocarbons to flow from the reservoir to the wellbore. Proppant materials are then carried into the fracture by the fracturing fluid, where they remain after the treatment is completed. Proppants have a dual role: (1) they hold the fracture open and (2) create a porous and permeable bed that results from granules packing after the fracturing pressure is released and the fracturing fluid is flowed back. The resulting permeable proppant bed enhances the ability of fluids to migrate from the formation to the wellbore through the fracture, making fracture conductivity the most important parameter in determining the degree of success of a hydraulic fracturing treatment.

With some formations, such as shale, the reservoir is drilled horizontally and then completed with multistage fracture treatments. These completion techniques consist of pumping a large number of stages into the horizontal well.

A key contributor to the success of stimulation is increased fracture surface area which allows more exposure to hydrocarbons in the formation, thereby leading to increased hydrocarbon productivity. This increase in the fracture surface area can be achieved by maximizing the created complex hydraulic fracturing network with far-field diversion. In addition, near-wellbore diversion is an important technique for ensuring uniform distribution of the treatment fluid across a full stage length.

During the life of the well one or more additional fracture treatments may be used to improve the well productivity from zones that were not initially produced. Such additional fracture treatments are known as refracturing treatments or refracs. To properly refracture a well, isolation of certain existing perforations is critical. The isolation is used to restrict or deny the perforations leading to the reservoir sections considered depleted from receiving subsequent fracturing fluids. Operations required to achieve this isolation can range from using a rig to setting physical barriers that redirect the fluid flow (mechanical isolation) to the use of specialized particulates placed in the flow stream to divert the treatment. These specialized particles integrated into the flow stream are commonly called "diverting agents," "diverting materials," or "diverters." Used effectively, diverters can eliminate the need for a rig to provide temporary physical barriers, thus improving the economics of a workover operation.

Diverters are also used to optimize the production of hydrocarbons from low permeability zones within a fracture network by diverting the flow of well treatment fluids (such as fracturing fluids and acidizing fluids) from higher permeability zones to lower permeability zones. When pumped into open hole fractures or through perforated casing, such diverters bridge off and prevent additional fluid flow into higher permeability zones. As a result, well treatment fluids (such as fracturing fluids and acidizing fluids) flow into other areas of lesser conductivity. By increasing the surface area and increasing flow resistance within created channels within the fracture network, hydrocarbon productivity is enhanced.

Many materials have been used as diverting agents. These include water-insoluble and oil-soluble calcium salts of fatty acids, cellophane flakes, naphthalenes, crushed limestone, sodium tetraborate, oyster shells, gilsonite, paraformaldehyde, perlite, oil-soluble resins, rock salt, benzoic acid and most recently phthalic anhydride, polylactic acid (PLA) and polyimides. Such diverters, however, are less effective in the stimulation of horizontal wells which typically require multistage fracture treatments, especially in far field operations. Alternative diverters are therefore desired especially for use in the development of a fracture network far field from the wellbore as well as near the wellbore.
WO 2016/025936 describes a method of enhancing the production of hydrocarbons from subterranean formations by re-directing well treatment fluids from high permeability zones to low permeability zones by means of a mixture comprising a dissolvable diverter and a proppant.
US 2015/041132 describes a method of enhancing the production of hydrocarbons from high permeability zones of a fracture near a wellbore by means of a mixture comprising a dissolvable diverter and a proppant.

### Summary of the Disclosure

The invention relates to a method of stimulating the production of hydrocarbons within a fracture network by use of a divert system. More specifically, the invention relates to a method of stimulating the production of hydrocarbons in a fracture network far field from the wellbore by use of a divert system.

According to one aspect of the invention, a method of stimulating the production of hydrocarbons from a subterranean formation located from 3.1 m to 914.4 m (10 to 3,000 feet) from a wellbore or a perforation tunnel is provided. **In** this method, a divert system comprising (i) a dissolvable diverter having a particle size from 4.760 mm to 0.297 mm (4 to 50 mesh) and (ii) a proppant having a particle size range between from 0.420 mm to 0.044 mm (40 to 325 mesh) and an apparent specific gravity greater than or equal to 1.05 is flowed into a high permeability zone of a fracture within a subterranean formation located from 3.1 m to 914.4 m (10 to 3,000 feet) from the wellbore. At least a portion of the high permeability zone is propped open with at least a portion of the proppant of the divert system and at least a portion of the high permeability zone is blocked with at least a portion of the diverter particulates of the divert system. A fluid is then pumped into the subterranean formation and into a lower permeability zone of the fracture. At least a portion of the diverter particulates blocking at least a portion of the high permeability zone are subsequently dissolved. Hydrocarbons are then produced from the high permeability zone and the low permeability zone of the fracture. A fracture network may be formed originating from the fracture into which the divert system was first introduced.

Characteristics and advantages of the present invention described above and additional features and benefits will be readily apparent to those skilled in the art upon consideration of the following detailed description of various embodiments and referring to the accompanying drawing.

### Brief Description of the Drawings

The following figures are part of the present specification, included to demonstrate certain aspects of various embodiments of this disclosure and referenced in the detailed description herein:
FIG. 1 illustrates the reduction in fracturing areas which are outside of intervals subjected to fracturing by use of the mixture disclosed herein.
FIG. 2 (A), (B), (C) and (D) depict a stimulation method using a fluid containing a dissolvable diverter.
FIG. 3 (A), (B), (C) and (D) depict a stimulation method using a mixture of dissolvable diverter and proppant.
FIG. 4 (A), (B), (C) and (D) depict a stimulation method using a mixture of dissolvable diverter and proppant for far field diversion as disclosed herein.
FIGs. 5, 6 and 7 illustrate the effect of proppant particle size on the segregation of proppant and soluble diverter at defined conditions.
FIG. 8 exemplifies the testing apparatus used to determine fluid leak off.
FIGs. 9, 11, 12 and 13 illustrate the effect of concentration of diverter particulates in Divert Systems defined herein on fluid leaking as a function of time.
FIG. 10 illustrates the effect of increasing fluid volume and pressure on fluid leaking through a 1.02 mm (0.04 inch) slot as a function of time of a Diverter System defined herein.
FIGs. 14, 15, 16 and 17 demonstrates reduction in conductivity and plugging of a fracture using Divert Systems defined herein.

### Detailed Description of the Preferred Embodiments

Characteristics and advantages of the present disclosure and additional features and benefits will be readily apparent to those skilled in the art upon consideration of the following detailed description of exemplary embodiments of the present disclosure and referring to the accompanying figures. It should be understood that the description herein and appended drawings, being of example embodiments, are not intended to limit the claims of this patent or any patent or patent application claiming priority hereto. On the contrary, the intention is to cover all modifications, equivalents and alternatives falling within the scope of the claims. Many changes may be made to the particular embodiments and details disclosed herein without departing from such scope.

As used herein and throughout various portions (and headings) of this patent application, the terms "disclosure", "present disclosure" and variations thereof are not intended to mean every possible embodiment encompassed by this disclosure or any particular claim(s). Thus, the subject matter of each such reference should not be considered as necessary for, or part of, every embodiment hereof or of any particular claim(s) merely because of such reference. Also, the terms "including" and "comprising" are used herein and in the appended claims in an open-ended fashion, and thus should be interpreted to mean "including, but not limited to ...."

Each numerical value set forth herein should be read once as modified by the term "about" (unless already expressly so modified), and then read again as not so modified unless otherwise indicated in context. The term "about" should be understood to include, but not be limited to, any amount or range within 10% of the recited amount or range (for example, a range from about 1 to about 10 encompasses a range from 0.9 to 11). A range listed or described is intended to include support for any conceivable sub-range within the range at least because every point within the range, including the end points, is to be considered as having been stated. For example, "a range of from 1 to 10" is to be read as indicating each possible number along the continuum between about 1 and about 10.

The term "second" as applied to a fluid or a stage shall, unless stated otherwise, refer to a fluid or stage which is successive to a "first" fluid or stage. Fluids or stages may precede the "first" fluid or first stage and fluids and stages may be between a "first" fluid or stage and a "second" fluid or stage. In other words, the terms "first" and "second" only relate to the order of introduction of two fluids.

The term "near wellbore" relates to a distance from a surface of the wellbore. A distance within the near wellbore may be a distance of 0 to about 15.24 m (0 to about 50 feet) from the wellbore surface, or 0 to about 3.05 m (0 to about 10 feet) from the wellbore surface, or 0 to about 1.52 m (0 to about 5 feet) from the wellbore surface.

The term "far field" relates to any portion of the subterranean formation that is not near wellbore, outside of a perforation tunnel or outside of a formation face in open hole configuration. For example, far field may refer to the subterranean zone that is from about 3.05 to about 914.4 m (about 10 feet to about 3000 feet) from a wellbore or perforation tunnel, or from about 30.48 to about 304.8 m (about 100 to about 1000 feet) from a wellbore or perforation tunnel. A zone within the far field may further be a distance of about 9.15 m (about 30 feet) or more from the wellbore surface, or about 15.24 m (about 50 feet) or more from the wellbore surface, or 15.24 to 30.48 m (50 to 100 feet) from the wellbore surface.

In an embodiment, a mixture of a dissolvable diverter and a proppant may be used in a stimulation operation in order to enhance the production of fluids within a subterranean formation. As used herein, the term "subterranean formation" shall include carbonate formations, such as limestone, chalk or dolomite as well as subterranean sandstone or siliceous formations in oil and gas wells, including quartz, clay, shale, silt, chert, zeolite or a combination thereof. The term shall also refer to coal beds having a series of natural fractures, or cleats used in the recovery of natural gases, such as methane, and/or sequestering a fluid which is more strongly adsorbing than methane, such as carbon dioxide and/or hydrogen sulfide.

Typically, the downhole temperature of the wellbore is between from about 26.7 °C (80°F) to about 204.4 °C (400°F). The dissolvable diverter particulates of the divert system are capable of diverting a well treatment fluid from a high permeability zone to a low permeability zone of a subterranean formation at such bottomhole temperatures. Since conductivity is permeability multiplied by injection geometry, this is synonymous to the statement that the particulates are capable of diverting a well treatment fluid from a highly conductive primary fracture(s) to less conductive secondary fractures. Further, since conductivity is a function of the relative resistance to inflow, the reference to a conductive fracture as used herein is considered synonymous to a conductive reservoir area.

The divert system may be used to increase productivity within the fracture network of horizontal as well as vertical wellbores.

The well treatment fluid used in the methods herein may include fracturing fluids and acidizing fluids.

The divert system may be included in the well treatment fluid. In particular, the divert system may be a component of the fluid, such as a fracturing fluid, acidizing fluid, etc. Alternatively, treatment fluids, such as fracturing fluids and acidizing fluids, which do not contain the divert system may be pumped into the formation before or after the pumping of the divert system.

In an embodiment, the divert system may be pumped into the formation in stages. A stage containing a well treatment fluid but not the divert system may be pumped into the formation after the pumping of any or all of the stages containing the diverter system.

After the casing within the wellbore is secured, the casing may be perforated to provide a channel near the wellbore which extends from the casing into the subterranean formation. The divert system may then be pumped into the channel through the perforated casing. A well treatment fluid containing the divert system may be pumped directly to the high permeability zone of the well formation.

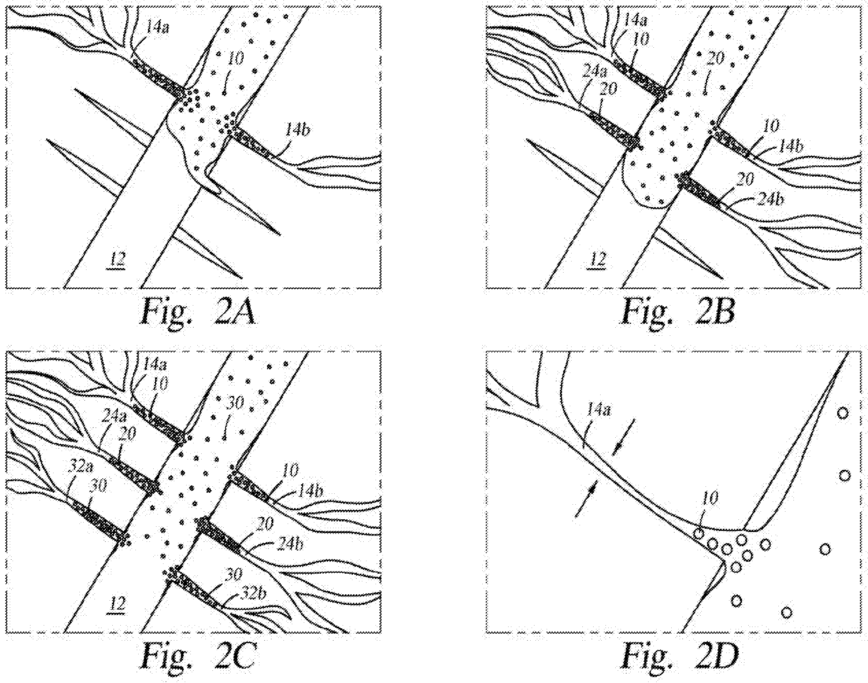

FIG. 2 depicts the use of a fluid in the production of fluids from lower permeability zones of a fracture network of a subterranean formation. The fluid illustrated contains diverter particulates but not proppant. The diverter particulates are shown as being capable of spreading the well treatment fluid deeper into subterranean formations.

In FIG. 2(A), diverter particulates 10 are introduced into fracture 14 of high permeability within a fracture network. The particulates are capable of diverting well treatment fluid from fracture 14 to a fracture having lower permeability than fracture 14. Since conductivity is permeability multiplied by injection geometry, this is synonymous to the statement that the particulates are capable of diverting a well treatment fluid from a highly conductive primary fracture(s) to less conductive secondary fractures. Further, since conductivity is a function of the relative resistance to inflow, the reference to a conductive fracture as used herein is considered synonymous to a conductive reservoir area.

The solid particulates of diverter 10 typically bridge the flow spaces of fractures on the face of the formation and form a filter cake. For instance, when employed in acid fracturing, the particulates are of sufficient size to bridge the flow space (created from the reaction of the injected acid with the reservoir rock) without penetration of the matrix. By being filtered at the face of the formation, a relatively impermeable or low permeability filter cake is created on the face of the formation. The pressure drop though the filter cake increases the flow resistance and diverts treatment fluid to the less permeable zones of the formation.

When used in stimulation operations, the particle size of the particulates is such that the particulates may form a bridge on the face of the rock. Alternatively, the particle size of the particulates may be such that they are capable of flowing into the fracture (as illustrated in FIG. 2) and thereby pack the fracture in order to reduce the permeability of at least some of the fractures in the formation.

As illustrated in FIG. 2(A), a majority of diverter particulates 10 in a well treatment fluid enter channel 12 and then proceed into one or more fractures 14 [illustrated as two fractures 14a and 14b in FIG. 2(A)] of high permeability (or non-damaged zone). A temporary block, plug, bridge or viscous pill is shown as forming (at least partially) at fracture 14a and 14b either within the fracture or at the interface of the fracture and channel 12. The terms "block" "plug", "bridge" and "viscous pill" shall be included within the term "bridge" as used herein. Such temporary bridges cause a pressure increase and divert fluid to a lower permeability zone, typically deeper into the subterranean formation, within the fracture network within the formation.

FIG. 2(B) illustrates the pumping of a second stage of a well treatment fluid containing diverter particulates 20 into channel 12. The fluid is curtailed from entering into fracture 14a and 14b by the presence of diverter particulates 10 and proceeds to lower permeability zones within the fracture network, represented as fractures 24a and 24b. Diverter particulates 20 bridge (at least partially) the flow of fluid in fracture 24a and 24b or the interface of the face of the fracture and channel 12.

A third treatment fluid is then pumped into channel 12, illustrated in FIG. 2(C), containing particulates 30 and is diverted into fractures 32a and 32b of lower permeability. The fluid is (at least partially) curtailed from entering into fractures 14a, 14b, 24a and 24b which are already at least partially blocked by diverter particulates 10 and 20, respectively.

Over a period of time, the diverters bridging the fractures dissolve. This in turn causes closure or collapse of the fractures. FIG. 2(D) illustrates the closing or collapsing of a fracture of high permeability zone (such as fracture 14a) once plugged by diverter particulates 10. The production of fluids from such closed or collapsed fractures is limited by the restricted pathway within the fracture. Such inhibition presents an acute problem with high permeability zones within a fracture network especially those near the wellbore.

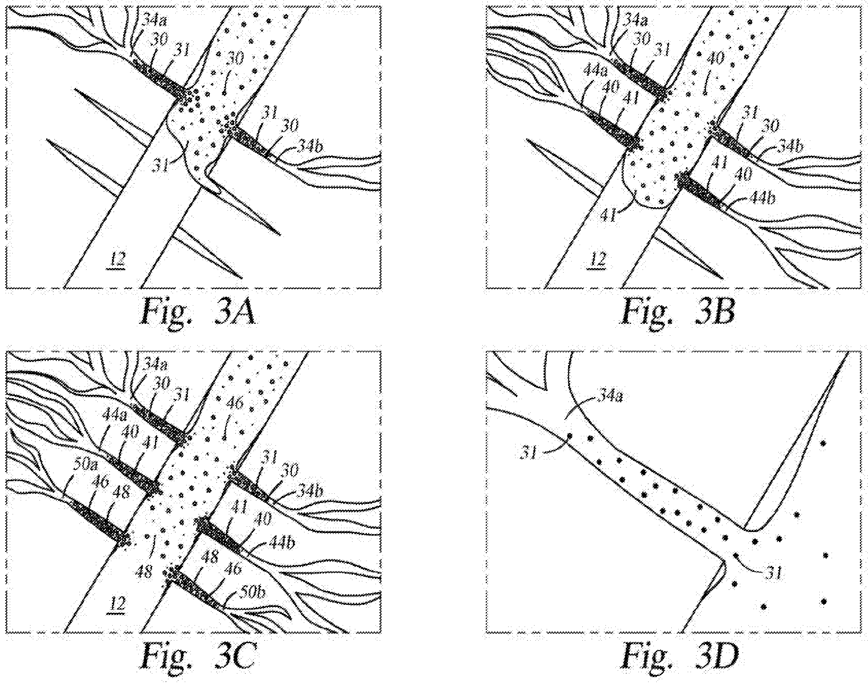

FIG. 3 exemplifies the addition of a divert system containing a mixture of dissolvable diverter and proppant in order to promote the production of hydrocarbon fluids. FIG. 3 is illustrative of stimulation operations near the wellbore of the perforating site (entrance into the reservoir) as well as far field stimulation operations.

As illustrated in FIG. 3(A), a majority of the divert system containing diverter particulates 30 and proppant 31 may enter into the high permeability (or non-damaged zone) represented by fractures 34a and 34b within a fracture network and forming (at least partially) a temporary bridge either within the fracture or at the interface of the fracture face and channel 12. FIG. 3(A) illustrates particulates 30 forming a bridge at the interface of the channel 12 and within the channel and proppant 31 entering the fracture within the channel and within the fracture.

FIG. 3(B) illustrates the pumping of a second stage of a treatment fluid containing particulates 40. As illustrated in FIG. 3(B), the second stage fluid contains proppant 41 though proppant does not necessarily have to be present in the second stage fluid. Proppant 41 may not be the same proppant as proppant 31. Likewise, the dissolvable diverter particulates 40 may or may not be the same diverter particulates as particulates 30. Diverter particulates 30 curtail the second well treatment fluid from entering (at least substantially) into fracture 34a and/or 34b. Diverter particulates 40 of the second fluid are shown as forming a bridge or plug (at least partially) within fractures 44a and 44b and at the face of fractures 44a and 44b with channel 12. This allows the well treatment fluid to flow further from the perforating site into fracture 44a and 44b of low permeability.

FIG. 3(C) illustrates the pumping of a third stage of treatment fluid containing diverter particulates 46 and proppant 48 (which may optionally be present in the fluid). The third stage fluid is (at least partially) curtailed from entering into fractures 34a, 34b, 44a and 44b which are already at least partially bridged or plugged with diverter particulates 30 and 40. Thus, the third stage treatment fluid containing diverter particulates 46 and optional proppant 48 flow further away from the near wellbore region through channel 12 and into fractures of lower permeability, represented as 50a and 50b. The process described may be repeated as desired.

At least one secondary fracture having a directional orientation distinct from the directional orientation of the primary fracture may be created. The second fluid diverts the flow of the second fluid into the secondary fracture. This process may be repeated and multiple fluids containing the mixture defined herein may be pumped into the formation to divert the flow of a preceding fluid and to provide proppant to created fractures. In this manner, a complex fracture network may be created consisting of multiple fractures in the formation originating from the primary fracture.

Over a period of time, the diverters which bridge or plug the fractures dissolve. Those fractures diverted by a fluid containing both diverter particulates and proppant, as illustrated in FIG. 3(D), remain open due to the presence of the proppant in the mixture; the proppant not being dissolvable at at-situ reservoir conditions. The production of fluids from such fractures is thereby enhanced. The use of the mixture is particularly of use in those high permeability zones near the wellbore which, as shown in FIG. 2(D), typically collapse when the diverter dissolves.

The bridging or plugging (at least partially) of higher permeability zones within a fracture network provides a depth of invasion which is related to the pore throat diameter. For a given formation type, the invasion depth is directly proportional to the nominal pore throat diameter of the formation. Since varying depths of invasion occur throughout the formation based upon the varying permeability or damage throughout the treated zone, the ability of the treatment fluid to invade into pore throats is dependent on the difference between pore throat sizing of the damaged and non-damaged formation. Invasion depths will normally be greater in the cleaner or non-damaged portion of the formation (larger pore throats) than in the lower permeability or damaged zones (smaller or partially filled pore throats). With a greater depth of invasion in the cleaner sections of the formation, more of the treatment fluid may be placed in these intervals.

As such, the use of the divert system increases the complexity of a fracture network by creating additional branch fractures. The proppant of the divert system overcomes the stresses which normally close the natural fractures. The solid diverter particles temporarily bridge inside the fracture to create the low-permeability zone that increases the net pressure within the fracture. As a result, a subsequently introduced fluid stage is redirected to an interval which has not been previously stimulated. The inclusion of the proppant in the mixture prevents or inhibits closing of created fractures after dissolution of the diverter.

In a preferred embodiment, a fluid containing the divert system may be injected into a fracture far field from the wellbore. Such fractures may have been created or enlarged from a hydraulic fracturing operation or may be natural fractures within the formation.

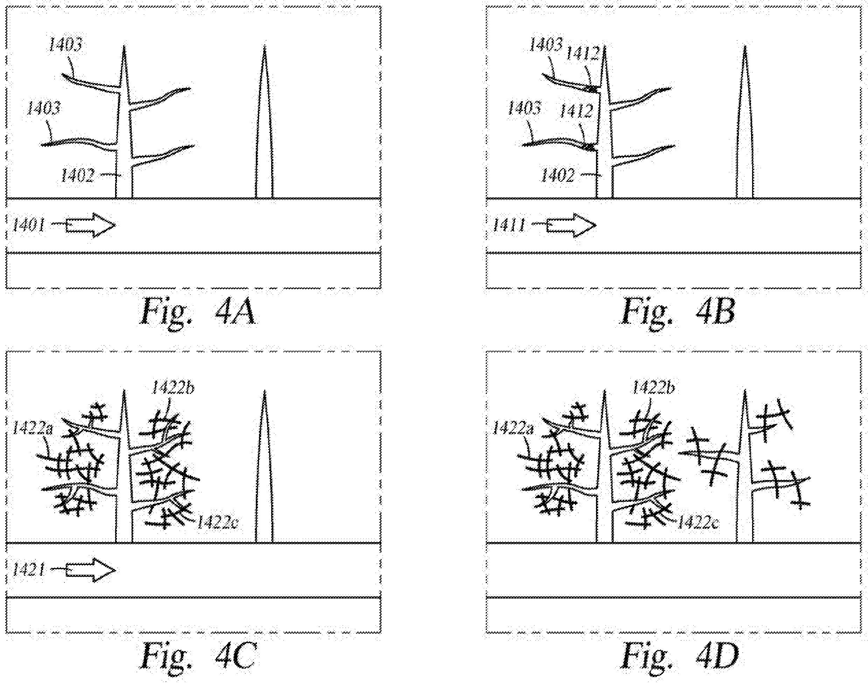

FIG. 4 exemplifies the use of the divert system in a far-field diversion operation to enhance the fracture network and/or complexity. Referring to FIG. 4(A), a fracturing fluid containing proppant is illustrated as being pumped into the formation via 1401 to create far field fracture 1402 and secondary fractures 1403 of minimal complexity. Thereafter, shown in FIG. 4(B), the divert system is pumped via 1411 into far field fracture 1402 and flows into the zone of high permeability within the fracture. The proppant in the divert system props open at least a portion of the high permeability zone. At least a portion of the high permeability zone is blocked with the diverter particulates of the divert system. As illustrated in FIG. 4(B), diverter particulates form bridges 1412 within the stimulated area which promotes the formation of secondary fractures off of the far field fracture. The secondary fractures are illustrated as having a directional orientation distinct from the directional orientation of the far field (primary) fracture.

Bridges 1412 formed from the diverter particulates of the divert system function to divert the flow of subsequently introduced fluid away from the far field (primary) fracture and into secondary fractures. As shown in FIG. 4(C), subsequent fracturing fluid is redirected via 1421 toward the smaller fractures (shown as 1422(a), (b) and (c)) or less permeable zones, thereby creating a more complex fracture network. The proppant ensures that fractures temporarily bridged by the diverter particulates remain propped for hydrocarbon flow after the soluble diverter particulates have been dissolved.

Such subsequent fracturing fluid may be a second stage of a fluid containing the divert system. Alternatively, such subsequent fracturing fluids may contain diverter particulates and/or proppant. Where the subsequent fracturing fluid contains diverter particulates and/or proppant, the diverter particulates and/or proppant may or may not be the same as those of the far field divert system illustrated in FIG. 4(B).

Thus, the process may be repeated by the pumping of multiple stages which may contain the divert system defined herein to divert the flow of a subsequently introduced fluid and to provide proppant to created fractures. **In** this manner, a complex fracture network may be created far field from the wellbore, the fracture network consisting of multiple fractures in the formation originating from the primary fracture.

Over time and downhole conditions (such as temperature and pressure) the soluble portion of the particulates of the divert system blocking the high permeability zone of the far field fracture is at least partially dissolved in water, leaving enhanced fracture geometry (shown in FIG. 4(D)) that is propped open by the insoluble proppant. Hydrocarbons are thereby produced from the high permeability zone and the lower permeability zone of the far field fracture.

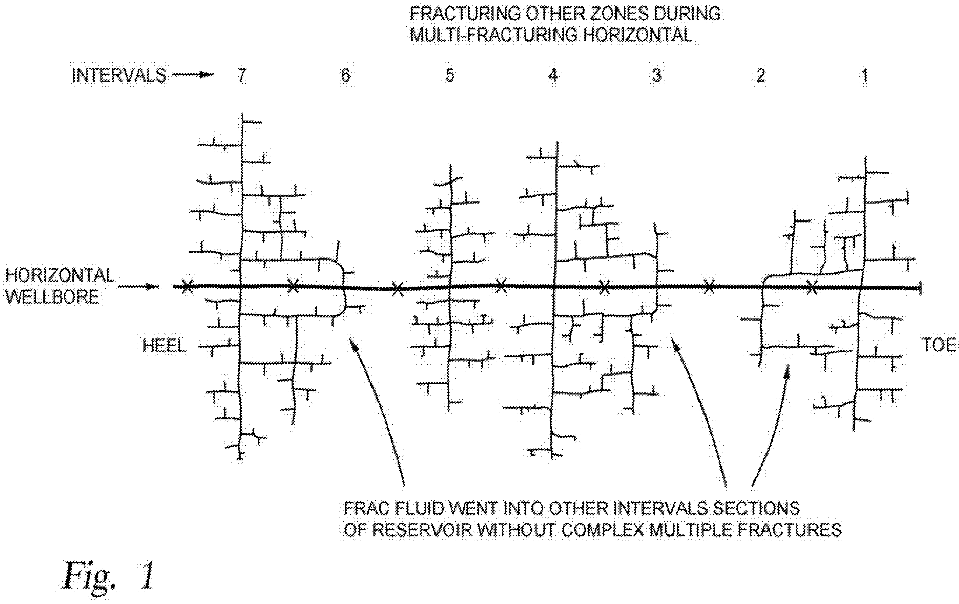

The divert system defined herein may further be used to further limit the fracturing of zones in formations (such as shale formations) which are known to exhibit non-uniform interval coverage. Microseismic mapping and well temperature logging often show poor frac fluid distribution across each interval and refracturing of nearby intervals. By directing the placement of fluid containing particulates of the mixture within the fractured zones, out of intervals fracturing areas are reduced. This is shown in FIG. 1.

Refracturing of a formation using the divert system disclosed herein is especially useful in the refracturing of horizontal wells. The divert system may be used in both near wellbore as well as far field from the wellbore. In such cases, a portion of the wellbore or the entire lateral of the wellbore may be perforated in a multitude of locations, sometimes dozens of locations, from the original fracture stimulation. Further, the wellbore may have new perforated clusters added during the refracturing operation that are intended to be fracture treated for the first time. With all of such perforations open, the divert system may be pumped into the formation. The particulates plug off the zones that are readily accepting the fluid most rapidly such that the fluid moves toward the areas of the formation which are more difficult to treat.

The dissolvable particulates may be of any shape. For instance, the particulates may be substantially spherical, such as being beaded, or pelleted. Further, the particulates may be non-beaded and non-spherical such as an elongated, tapered, egg, tear-drop or oval shape or mixtures thereof. For instance, the particulates may have a shape that is cubic, bar-shaped (as in a hexahedron with a length greater than its width, and a width greater than its thickness), cylindrical, multi-faceted, irregular, or mixtures thereof. In addition, the particulates may have a surface that is substantially roughened or irregular in nature or a surface that is substantially smooth in nature.

The particulates may be partially, but not fully, dissolved at in-situ reservoir conditions. Typically, the particulates are fully dissolved over time at bottomhole temperatures.

Suitable dissolvable diverters for use as the diverter particulates in the divert system include phthalic anhydride, terephthalic anhydride, phthalic acid, terephthalic acid, gilsonite, rock salt, benzoic acid flakes, polylactic acid and mixtures thereof.

Preferred diverting agents include those of structural formula (III): 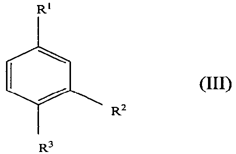 wherein:
R' is -COO-(R⁵O)_{y}-R⁴ or -H;
R² and R³ are selected from the group consisting of -H and -COO-(R⁵O)_{y}-R⁴;
   provided both R² or R³ are -COO-(R⁵O)_{y}-R⁴ when R¹ is -H and further provided only one of R² or R³ is -COO-(R⁵O)_{y}-R⁴ when R¹ is

   -COO-(R⁵O)_{y}-R⁴;
R⁴ is -H or a C₁-C₆ alkyl group;
R⁵ is a C₁-C₆ alkylene group; and
each y is 0 to 5.
Alternatively, the particulates may be an anhydride of the compound of structural formula (III).

In a preferred embodiment, R² of the compound of formula (III) is -H and R³ is -COO-(R⁵O)_{y}-R⁴. In an especially preferred embodiment, the compound of formula (III) is phthalic acid (wherein y is 0 and R¹ and R⁴ are - H). In another preferred embodiment, the compound of formula (III) is phthalic acid anhydride.

Still in another preferred embodiment, R² of the compound of formula (III) is -COO-(R⁵O)_{y}-R⁴ and R³ is -H. In an especially preferred embodiment, the compound of formula (III) is terephthalic acid (wherein y is 0 and R² and R⁴ are -H). In another preferred embodiment, the compound of formula (III) is terephthalic acid anhydride.

Diverting agents of formula (III) are preferred where the bottomhole temperature of the well is less than 121.1 °C (250°F), such as between 26.7 °C (80°F) and 121.1 °C (250°F). In such instances, phthalic anhydride, terephthalic anhydride, phthalic acid and terephthalic acid are especially preferred.

Other diverters include those aliphatic polyesters having the general formula of repeating units illustrated in structural formula (I) below: 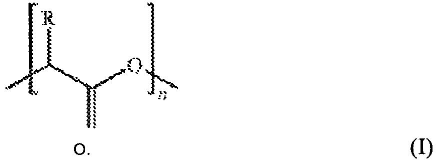 where n is an integer between 75 and 10,000 and R is selected from the group consisting of hydrogen, alkyl (preferably a Ci-C6 alkyl), aryl (preferably a C6-Cis aryl), alkylaryl (preferably having from about 7 to about 24 carbon atoms), acetyl, heteroatoms (such as oxygen and sulfur) and mixtures thereof. In a preferred embodiment, the weight average molecular weight of the aliphatic polyester is between from about 100,000 to about 200,000.

A preferred aliphatic polyester is poly(lactide). Poly(lactide) is synthesized either from lactic acid by a condensation reaction or more commonly by ring-opening polymerization of cyclic lactide monomer. Since both lactic acid and lactide can achieve the same repeating unit, the general term poly(lactic acid) as used herein refers to formula (I) without any limitation as to how the polymer was made such as from lactides, lactic acid, or oligomers, and without reference to the degree of polymerization.

The lactide monomer exists generally in three different forms: two stereoisomers L- and D-lactide and racemic D,L-lactide (meso-lactide). The oligomers of lactic acid, and oligomers of lactide may be defined by the formula: 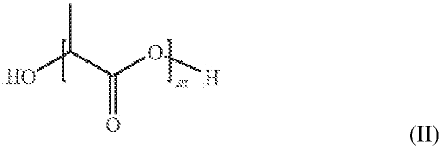 where m is an integer: 2 ≤ m ≤75. Preferably m is an integer: 2 ≤ m ≤ 10. These limits correspond to number average molecular weights below about 5,400 and below about 720, respectively. The chirality of the lactide units provides a means to adjust, inter alia, degradation rates, as well as physical and mechanical properties. Poly(L-lactide), for instance, is a semi-crystalline polymer with a relatively slow hydrolysis rate. Poly(D,L-lactide) may be a more amorphous polymer with a resultant faster hydrolysis rate. The stereoisomers of lactic acid may be used individually or combined. Additionally, they may be copolymerized with, for example, glycolide or other monomers like ε-caprolactone, 1,5-dioxepan-2-one, trimethylene carbonate, or other suitable monomers to obtain polymers with different properties or degradation times. Additionally, the lactic acid stereoisomers may be modified by blending high and low molecular weight polylactide or by blending polylactide with other polyesters.

Where the bottomhole temperature of the well is greater than 121.1 °C (250°F), such as between 107.2 °C (225°F) and 204.4 °C (400°F), the preferred diverter particulates include those of formula (II), such as polylactic acid.

Further, a mixture of the diverter particulates of formula (III) and the polyesters of formula (II) may be used. In such cases, the weight ratio of particulates of formula (I) and particulates of formula (III) introduced into the well is typically between from about 95:5 to about 5:95 and more typically between from about 40:60 to about 60:40. The mixture of particulates are particularly effective when placed into wells having bottom hole temperatures between from about 60 °C (140° F) to about 87.8 °C (190° F). For instance, the compound of formula (III) enhances the performance of the aliphatic polyester of formula (I) since in the absence of the compound of formula (III) the aliphatic polyester is non-dissolvable or sparingly soluble at bottomhole temperatures less than 121.1 °C (250°F).

Further, the phthalic acid or phthalic acid anhydride of formula (III) may be used to enhance the activity of other aliphatic polyesters including star- and hyper-branched aliphatic polyesters polymers as well as other homopolymers, random, block and graft copolymers. Such suitable polymers may be prepared by polycondensation reactions, ring-opening polymerizations, free radical polymerizations, anionic polymerizations, carbocationic polymerizations, and coordinative ring-opening polymerization for, e.g., lactones, and any other suitable process. Specific examples of suitable polymers include polysaccharides such as dextran or cellulose; chitin; chitosan ; proteins; orthoesters ; poly(glycolide); poly(c -caprolactone); poly(hydroxybutyrate); poly(anhydrides); aliphatic polycarbonates; poly(orthoesters); poly(amino acids); poly(ethylene oxide); and polyphosphazenes.

Typically, the amount of diverter particulates (in the divert system) in the fluid introduced into the well is between from about 0.01 to about 30 weight percent (based on the total weight of the fluid), more typically from about 0.01 to about 3% by weight.

The particulates defining the mixture or use in the method disclosed herein have a sized particle distribution effective to block the penetration of the fluid into the high permeability zone of the formation. Typically, the particle size distribution of the particulates is in the range from about 0.1 micron to about 1.0 millimeter for near wellbore diversion operations. In near wellbore applications, the filter cake is more easily formed when at least 60%, more preferably 80%, of the particulates of the divert system have a particle size between from about 150 µm to about 2000 µm.

With far field diversion, the particle size of the diverter particulates of the divert system is typically from about 4.760 mm to 0.297 mm (about 4 to 50 mesh). Further, the apparent density of the diverter particulates of the divert system, when used for far field diversion, is preferably greater than or equal to 1.2 g/cc, preferably from about 1.2 to about 1.75 g/cc.

The divert system is typically introduced as a slurry in a carrier fluid. Suitable carrier fluids include water, salt brine or slickwater. Suitable brines including those containing potassium chloride, sodium chloride, cesium chloride, ammonium chloride, calcium chloride, magnesium chloride, sodium bromide, potassium bromide, cesium bromide, calcium bromide, zinc bromide, sodium formate, potassium formate, cesium formate, sodium acetate, and mixtures thereof.

When used in far field diversion, the carrier fluid is more desirably viscous than slickwater, preferably having a viscosity in excess of 0.005 Pa·s (5 cP), and most preferably having a viscosity in excess of 0.01 Pa·s (10 cP) at room temperature (measuring using a Brookfield Viscometer equipped with a #2 spindle stirring at 10 rpm).

The fluid containing the divert system may be gelled or non-gelled. Typically the fluid is gelled by the inclusion of a viscosifying agent such as a viscosifying polymer or viscoelastic fluid. The fluid may contain a crosslinking agent though a cros slinking agent is not required.

The fluid of the treatment fluid may further be foamed with a liquid hydrocarbon or a gas or liquefied gas such as nitrogen or carbon dioxide. In addition, the fluid may further be foamed by inclusion of a non-gaseous foaming agent. The non-gaseous foaming agent may be amphoteric, cationic or anionic. Suitable amphoteric foaming agents include alkyl betaines, alkyl sultaines and alkyl carboxylates, such as those disclosed in U.S. Patent Publication No. 2010/0204069,. Suitable anionic foaming agents include alkyl ether sulfates, ethoxylated ether sulfates, phosphate esters, alkyl ether phosphates, ethoxylated alcohol phosphate esters, alkyl sulfates and alpha olefin sulfonates. Suitable cationic foaming agents include alkyl quaternary ammonium salts, alkyl benzyl quaternary ammonium salts and alkyl amido amine quaternary ammonium salts.

The pH of the treatment fluid containing the divert system and proppant may further be adjusted when desired. When adjusted, the fluid typically has a value of about 6.5 or more, 7 or more, 8 or more, 9 or more, between 9 and 14, and, most preferably, between 7.5 and 9.5. The pH may be adjusted by any means known in the art, including adding acid or base to the fluid, or bubbling carbon dioxide through the fluid.

The amount of proppant in the divert system is typically between from about 0.01 to about 3% by weight based on the total weight of the fluid pumped into the well containing the divert system.

For use in near wellbore applications, the proppant of the divert system may be any proppant suitable for stimulation known in the art and may be deformable or non-deformable at in-situ reservoir conditions. Examples include, but are not limited to, conventional high-density proppants such as quartz, glass, aluminum pellets, silica (sand) (such as Ottawa, Brady or Colorado Sands), synthetic organic particles such as nylon pellets, ceramics (including aluminosilicates), sintered bauxite, and mixtures thereof.

In addition, protective and/or hardening coatings, such as resins to modify or customize the density of a selected base proppant, e.g., resin-coated sand, resin-coated ceramic particles and resin-coated sintered bauxite may be employed. Examples include Suitable proppants further include those set forth in U.S. Patent Publication No. 2007/0209795 and U.S. Patent Publication No. 2007/0209794.

Further, any of the ultra-lightweight (ULW) proppants may also be used. Such proppants are defined as having a density less than or equal to 2.45 g/cc, typically less than or equal to 2.25 g/cc, more typically less than or equal to 2.0 g/cc, even more typically less than or equal to 1.75 g/cc. Some ULW proppants have a density less than or equal to 1.25 g/cc. Exemplary of such relatively lightweight proppants are ground or crushed walnut shell material that is coated with a resin, porous ceramics, nylon, etc.

In a preferred embodiment, the proppant is a relatively lightweight or substantially neutrally buoyant particulate material or a mixture thereof. Such proppants may be chipped, ground, crushed, or otherwise processed. By "relatively lightweight" it is meant that the proppant has an apparent specific gravity (ASG) at room temperature that is substantially less than a conventional proppant employed in hydraulic fracturing operations, e.g., sand or having an ASG similar to these materials. Especially preferred are those proppants having an ASG less than or equal to 3.25. Even more preferred are ultra-lightweight proppants having an ASG less than or equal to 2.25, more preferably less than or equal to 2.0, even more preferably less than or equal to 1.75, most preferably less than or equal to 1.25 and often less than or equal to 1.05.

By "substantially neutrally buoyant", it is meant that the proppant has an ASG close to the ASG of an ungelled or weakly gelled carrier fluid (e.g., ungelled or weakly gelled completion brine, other aqueous-based fluid, or other suitable fluid) to allow pumping and satisfactory placement of the proppant using the selected carrier fluid. For example, urethane resin-coated ground walnut hulls having an ASG of from about 1.25 to about 1.35 may be employed as a substantially neutrally buoyant proppant particulate in completion brine having an ASG of about 1.2. As used herein, a "weakly gelled" carrier fluid is a carrier fluid having minimum sufficient polymer, viscosifier or friction reducer to achieve friction reduction when pumped down hole (e.g., when pumped down tubing, work string, casing, coiled tubing, drill pipe, etc.), and/or may be characterized as having a polymer or viscosifier concentration of from greater than about 0 pounds of polymer per thousand gallons of base fluid to about 10 pounds of polymer per thousand gallons of base fluid, and/or as having a viscosity of from about 1 to about 10 centipoises. (1 pound per thousand gallons equals to 0.1198 g/liter, 1 centipoise equals to 1 mPa·s.) An ungelled carrier fluid may be characterized as containing about 0 pounds per thousand gallons of polymer per thousand gallons of base fluid. (If the ungelled carrier fluid is slickwater with a friction reducer, which is typically a polyacrylamide, there is technically 1 to as much as 8 pounds per thousand of polymer, but such minute concentrations of polyacrylamide do not impart sufficient viscosity (typically < 0.003 Pa·s (3 cP)) to be of benefit).

Other suitable relatively lightweight proppants are those particulates disclosed in U.S. Patent Nos. 6,364,018, 6,330,916 and 6,05 9,034. These may be exemplified by ground or crushed shells of nuts (pecan, almond, ivory nut, brazil nut, macadamia nut, etc.); ground or crushed seed shells (including fruit pits) of seeds of fruits such as plum, peach, cherry, apricot, etc.; ground or crushed seed shells of other plants such as maize (e.g. corn cobs or corn kernels), etc.; processed wood materials such as those derived from woods such as oak, hickory, walnut, poplar, mahogany, etc. including such woods that have been processed by grinding, chipping, or other form of particalization. Preferred are ground or crushed walnut shell materials coated with a resin to substantially protect and water proof the shell. Such materials may have an ASG of from about 1.25 to about 1.35.

Further, the relatively lightweight particulate for use in the invention may be a selectively configured porous particulate, as set forth, illustrated and defined in U.S. Patent No. 7,426,961.

When the divert system is to be used in far field applications, greater specificity in the selection for the proppant of the divert system (as well as the diverter particulates) is often desirable. Typically, the weight ratio of diverter particulates to proppant in the divert system for use in far field diversion is from about 5:95 to about 95:5.

For far field diversion treatments, the proppant of the divert system is preferably one that has an ASG greater than or equal to 1.05 and preferably greater than or equal to 1.9 and most preferably greater or equal to 2.6. When used with far field diversion, the particle size of the proppant is desirably between from about 0.420 mm to about 0.044 mm (about 40 to about 325 mesh).

Preferred proppants for the divert system for use in far field diversion are sand and relatively light weight or substantially neutrally buoyant particulate materials or mixtures thereof.

While the divert system may be pumped into the formation far field as a component of a well treatment fluid, such as a fracturing fluid or acidizing fluid, in another embodiment, a well treatment fluid may be pumped into the formation prior to pumping of the divert system. Further, a well treatment fluid not containing the divert system may be pumped into the formation after the particulates of the divert system have blocked or plugged (at least partially) the face of one zone within the fracture network.

Further, a fluid containing the divert system may be pumped into the formation in stages. A stage containing a well treatment fluid but not the divert system may be pumped into the formation after any or all of the stages containing the diverter system.

A fluid containing the diverter system may further be pumped into the wellbore in alternative stages and may be separate by spacer fluids. The spacer fluid typically contains a salt solution such as NaCl, KC1 and/or NH₄Cl. For instance, when used in an acid stimulation operation, it may be desirable to alternate the pumping of acid stimulation fluids and the fluid containing the diverter system. An exemplary pumping schedule may be (i) pumping an acid stimulation fluid; (ii) optionally pumping a spacer fluid; (iii) pumping a fluid containing the diverter system; (iv) optionally pumping a spacer fluid; and then repeating the cycle of steps (i), (ii), (iii) and (iv).

A fluid containing the divert system may further contain additional well treatment fluid additives. These include one or more conventional additives to the well service industry such as a gelling agent, fluid loss additives, gel breaker, surfactant, demulsifier, biocide, mutual solvent, surface tension reducing agent, defoaming agent, demulsifier, non-emulsifier, scale inhibitor, gas hydrate inhibitor, enzyme breaker, oxidative breaker, buffer, clay stabilizer, acid, buffer, solvent or a mixture thereof.

Where the fluid containing the mixture is an acidizing fluid, it may be preferable to include within the fluid a corrosion inhibitor, a corrosion inhibitor intensifier, or a combination thereof. The purpose of these additives is to reduce the corrosive effects that the acids may have on the well tubulars. Suitable corrosion inhibitors can include alkali metal nitrites, nitrates, phosphates, silicates and benzoates. Representative suitable organic inhibitors include hydrocarbyl amine and hydroxy-substituted hydrocarbyl amine neutralized acid compound, such as neutralized phosphates and hydrocarbyl phosphate esters, neutralized fatty acids (e.g., those having 8 to about 22 carbon atoms), neutralized carboxylic acids (e.g., 4-(t-butyl)-benzoic acid and formic acid), neutralized naphthenic acids and neutralized hydrocarbyl sulfonates. Mixed salt esters of alkylated succinimides are also useful. Corrosion inhibitors can also include the alkanolamines such as ethanolamine, diethanolamine, triethanolamine and the corresponding propanolamines as well as morpholine, ethylenediamine, N,N-diethylethanolamine, alpha- and gamma-picoline, piperazine and isopropylaminoethanol.

Fluids containing the mixture may also have an internal breaker built into the system to insure that the fluid viscosity can be reduced after a period of time. The internal breaker may also be an oxidizer such as, but not limited to, persulfates, such as ammonia persulfate and sodium persulfate, and peroxidizers such as hydrogen peroxide.

All percentages set forth in the Examples are given in terms of weight units except as may otherwise be indicated.

### EXAMPLES

The following designations are used in Examples 1-7:
A: a 90:10 v/v mixture of phthalic anhydride:phthalic acid, 0.841/0.420 mm (20/40 mesh), melting range (melting range represents the temperature at which the solid started to soften to when it was completely melted): 130-132.2 °C (266-270°F);
B: a 85:15 v/v mixture of phthalic anhydride:phthalic acid, 2.38/0.297 mm (8/50 mesh), melting range: 132.2-180 °C (266-356°F);
C: polylactic acid, 1.41/0.210 mm (14/70 mesh), melting range: 147.8-165 °C (298-329°F);
D: polylactic acid, 2.00/0.210 mm (10/70 mesh), melting range: 168.9-173.9 °C (336-345°F).
E: phthalic anhydride of 2.00/0.297 mm (10/50 mesh) and specific gravity of 1.5 g/cc with melting range: 130-132 .2°C (266-270°F)
F: polylactic acid of 2.00/0.297 mm (10/50 mesh) and specific gravity of 1.5 g/cc with melting range: 147.8-165 °C (298-329°F).

Example 1. Phthalic anhydride (obtained from a commercial supplier) and Sample A (8g of each) were first mixed with 100 mL deionized water or HCl 15% and maintained for 20 hours at 82.2 °C (180°F), and then cooled down to room temperature and kept for 3 hours. The mixture was vacuum filtrated with 100 mL water and dried for 24 hours at 71 °C (160°F). The results are set forth in Table I.

**Table I**

| **Sample** | **Dissolved (%)** | **Melting Range, °C** | **Solvent** |
|---|---|---|---|
| Commercial Phthalic Anhydride | 6 | 206.1 (403 °F) | Deionized water |
| Sample A | 7.5 | 205 (401 °F) | Deionized water |
| Sample A, crushed | 4 | 202.8-203.9 (397-399 °F) | Deionized water |
| Commercial Phthalic Anhydride | 4 | 211.1 (412 °F) | HCl 15% |
| Sample A | 0 | 210 (410 °F) | HCl 15% |
| Sample A, crushed | 16 | 212.8 (415 °F) | HCl 15% |

The indicated melting range refers to the melting range of the undissolved sample, and not the starting material.
FTIR and melting point of the recovered undissolved samples showed that the remaining phthalic anhydride had converted into phthalic acid.

Example 2. Samples of Sample A (each 5 g) were mixed with 100 mL of either deionized water (DI) or tap water for (1) 54 hours at 82.2 °C (180°F) and (2) 64 hours at 60 °C (140°F) and then left to cool at room temperature. The solids were vacuum filtrated with 100 mL water and dried for 24 h at 71.1 °C (160°F). The results are set forth in Table II.

| **Table II** | | | |
|---|---|---|---|
| **64 hr PERCENT SOLUBILITY @ 60 °C (140°F)** | | **54 hr PERCENT SOLUBILITY @ 82.2 °C (180°F)** | |
| **tap water** | **DI** | **tap water** | **DI** |
| 18.5 | 13.4 | 5.6 | 9.3 |

The FTIR and melting point of the recovered undissolved samples showed that the remaining phthalic anhydride had converted into phthalic acid. Table II illustrates that more phthalic anhydride was converted to phthalic acid at higher temperatures. Sample A was thus more suitable for lower temperature applications.

Example 3. Different initial weights of Sample A were mixed with 18 mL of deionized water for 24 hours at 121.1 °C (250°F) using a digestion vessel. After the samples cooled down, they were vacuum filtrated with deionized water and dried for 24 hours at 71.1 °C (160°F). The results are set forth in Table **III.** The FTIR and melting point of the recovered undissolved samples showed that the remaining phthalic anhydride had converted into phthalic acid.

**Table III**

| **Sample #** | **Sample A weight (g)** | **Dissolution** amount **(wt. %)** |
|---|---|---|
| **1** | 1 | 55.6 |
| 2 | 0.5 | 83.7 |
| 3 | 0.25 | 100 |
| 4 | 0.1 | 100 |
| 5 | 0.05 | 100 |
| 6 | 0.025 | 100 |

Example 4. Different initial weights of Sample C were tested for solubility by using a digestion vessel (at 121.1 °C (250°F) for 24 hours) and mixing with 18 mL of DI water, using different sample concentrations. The results are set forth in Table IV.

**Table IV**

| **Sample #** | **Sample C weight (g)** | **Dissolution amount (wt.%)** |
|---|---|---|
| **1** | 1.000 | 100 |
| 2 | 0.500 | 100 |
| 3 | 0.250 | 100 |
| 4 | 0.100 | 100 |
| 5 | 0.050 | 100 |
| 6 | 0.025 | 100 |

Example 5. Samples were dissolved in water and heated in a water bath. After reaching room temperature, the samples were filtered via a vacuum. The recovered material was then dried overnight and the percentage of dissolved solids was calculated based on the amount of sample retained on a Whatman #41 filter paper. All samples were allowed to dry for at least 24 hours at approximately 71.1 °C (160°F). The samples (2.5 total)
were then tested for solubility in 50 mL of deionized water using different temperatures (heating for 24 or 48 hours). The 1:1 mixture of Sample B and Sample C were made by mixing equal amounts of each product (1.25 g) and diluting in 50 mL total deionized water. The results are set forth in Table V:

**Table V**

| SAMPLE | 24hr | | 48hr | | |
|---|---|---|---|---|---|
| | 60°C (140°F) | 82.2°C (180°F) | 26.7°C (80°F) | 82.2°C (180°F) | 148.9°C (300°F) |
| B | 8.7 | 21.6 | 19.9 | 5.4 | 11.0 |
| B | 6.1 | n/a | 24.1 | n/a | 10.5 |
| C | 0.31 | 1.1 | 0.99 | 9.9 | 99.3 |
| C | 0.30 | n/a | 0.98 | n/a | 99.2 |
| B:C | 10.9 | 31.1 | 13.8 | 30.1 | 90.5 |
| B:C | 10.2 | n/a | 12.9 | n/a | 87.2 |

Example 6. Additional solubility tests were performed using Sample B and Sample D (2.5 g total) in 50 mL of deionized water using different temperatures (heating for 24 or 48 hr). The 1:1 mixture of Sample B:Sample D was made by mixing equal amounts of each product (1.25g) and diluting in 50 mL deionized water. The results are set forth in Table VI:

**Table VI**

| SAMPLE | 24hr | | 48hr |
|---|---|---|---|
| | 65.6°C (150°F) | 82.2°C (180°F) | 65.6°C (150°F) |
| B | 24.8 | 21.6 | 16.5 |
| D | 0.2 | 0.24 | 0.1 |
| 1:1 B:D | 20.2 | 23.1 | 16.7 |

The Examples illustrate that phthalic anhydride/phthalic acid is more suitable as a diverting agent in lower temperatures (82.2-121.1°C (180-250°F)) applications and polylactic acid is more suitable as a diverting agent at higher temperature higher temperature (>121.1°C (250 °F)) applications. The Examples further illustrate, based on the solubility results, that phthalic anhydride/phthalic acid acts enhances lowering the temperature at which polylactic acid dissolves. When mixed with polylactic acid, the Examples illustrate that phthalic anhydride/phthalic acid acts to enhance the activity of polylactic acid, while lowering the temperature at which polylactic dissolves. Thus, when mixed with phthalic anhydride/phthalic acid, polylactic acid may be used in lower temperature applications.

Example 7. Conductivity tests of a mixture of 13.52 g (85 wt. %) phthalic acid anhydride and 2.38 g (15 wt. %) LitePropTM 125 lightweight proppant, a product of Baker Hughes Incorporated, having an apparent specific gravity of 1.25 at room temperature, were conducted. The tests were performed according to a modified API RP 61 (1" Revision, Oct. 1, 1989) using an API 10 conductivity cell with Ohio sandstone wafer side inserts to simulate the producing formation. The mixture was then loaded between the sealed sandstone wafers to increase the propped width. The mixture was loaded in the conductivity cell at about 2.44 kg/m² (0.5 lb/ft²). The conductivity cell was then placed on a press and was subjected to a closure stress of 34.47 mPa (5,000 psi) and a temperature of 93°C (200°F). De-ionized water was then allowed to flow through the test pack at 10 ml/min and the baseline conductivity determined. The cell was then shut off for 24 hours at which the flow of de-ionized water was resumed and Darcy flow maintained. The results are set forth in Table VII.

**Table VII**

| TIME, Hours | STRESS, mPa | CONDUCTIVITY, and-ft | PERMEABILITY, Darcies | WIDTH, mm |
|---|---|---|---|---|
| 0 | 34.47 (5000 psi) | 559 | 118 | 1.44 |
| 24 | 34.47 (5000 psi) | 2176 | 474 | 1.40 |
| 50 | 34.47 (5000 psi) | 6787 | 1478 | 1.40 |

After flow of 50 hrs, minor traces of the diverter could be seen at the outlet of the cell and negligible undissolved diverter at the inlet of the cell.

### Examples 8 and 9.

The following designations are used in Examples 8-
Diverter System A: a 29/71 w/w mixture of solid phthalic anhydride diverter particulates, melting range of 131.1-132.2 °C (268-270°F), and proppant;
Diverter System B: a 19/81 w/w mixture of solid polylactic acid diverter particulates, melting range: 131.1-180 °C (268-356°F), and proppant.
The proppant in both Diverter System A and Diverter System B was a lightweight ceramic proppant having an apparent specific gravity of 2.61. The proppant was rated up to 15,000 psi (103.42 mPa) closure stress. The solid diverter particulates of Diverter System A and Diverter System B were nearly the same particle sizes and distribution, the principal difference being the soluble particle shape: the diverter particulates of Diverter System A being more flake-like and the diverter particulates of Diverter System B being more spherical. The apparent density of the diverter particulates of Diverter System A and the diverter particulates of Diverter System B was approximately 1.24 g/cm³.

Example 8. Recognizing that the density difference between the soluble solid diverter particulates of Diverter System A and Diverter System B may affect the placement of the mixture inside the fracture at far-field locations, Example 8 demonstrates the requisite size limitations of the soluble solid diverter particulates and the proppant of Diverter System A and Diverter System B to minimize separation during placement downhole of the low-density soluble diverter particulates and the higher-density proppant.

A computational fluid dynamics (CFD) model was constructed using commercial CFD software to simulate the diverter flow inside the dimensions of a full-fracture for a far-field diversion application. The simulator used predicted the horizontal placement of the Divert System inside the fracture and the likely separation between low-density soluble diverter particulates and the higher-density proppant. The developed model had a geometry to simulate a transverse fracture with a dimension of 328.08 m (100 ft) (height) x 1312.34 m (400 ft) (length) x 5.08 mm (0.2 in.) (width). The inlet flow to the fracture was through a 1.52 m (0.5-ft) wellbore radius located at the center of geometry with a constant injection rate condition. The outflow condition was fixed at constant pressure in the right and left far boundary of the fracture. Factors such as particle size, particle density, proppant size, proppant density, carrier fluid density, carrier fluid viscosity, gravity effect, and bounce effect were all included in the numerical model. All injected fluids were assumed to behave as Newtonian fluids. In all runs, the size of the solid diverter particulates was 0.841 mm (20 mesh). To determine the optimum proppant size that will not segregate from the dissolvable particles, the proppant size was tested at 0.841 mm (20 mesh), 0.297 mm (50 mesh), 0.210 mm (70 mesh), and 0.149 mm (100 mesh).

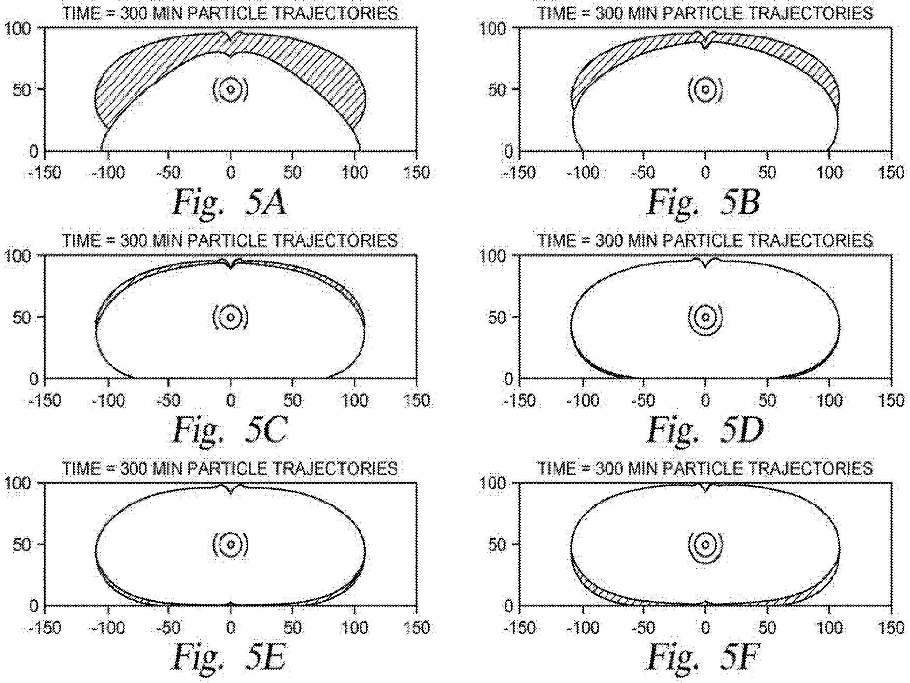

The effect of proppant particle size on the flow of the Divert Systems inside full fracture geometry was determined using an injection rate of 10 bpm/cluster and a carrier fluid viscosity of 0.01 Pa·s (10 cP). As shown in FIG. 5, separation between proppant and soluble diverter particulates occurred for proppant sizes of 0.841 mm (20 mesh) and 0.595 mm (30 mesh). However, for 0.420 mm (40 mesh), separation of proppant diverter particulates was minimized. For proppant size of 0.297 mm (50 mesh) and above, there was little, if any, separation between the soluble diverter particulates and proppant.

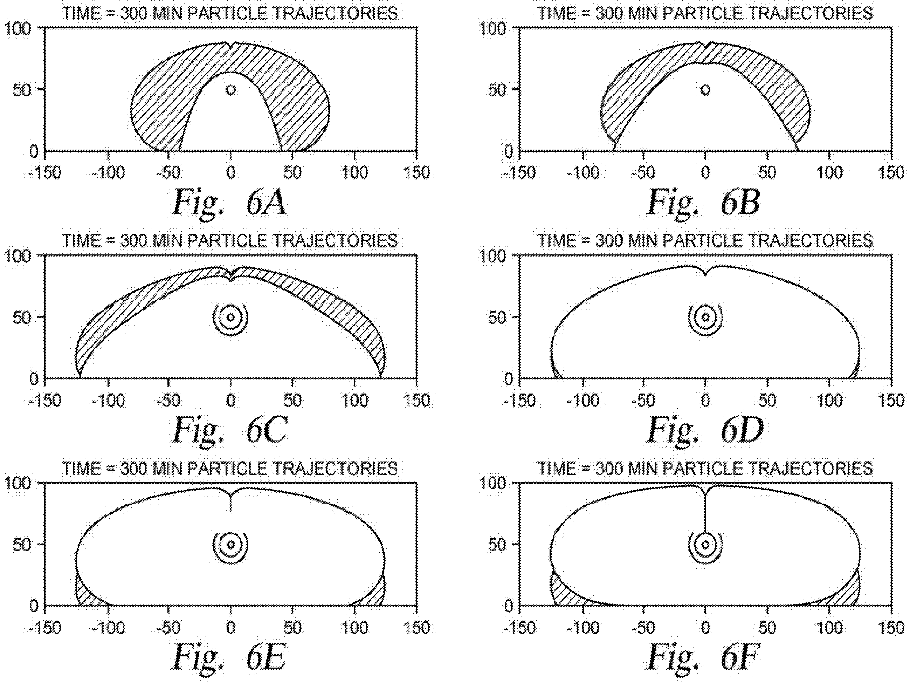

The effect of particle size of proppant on the flow of the Divert Systems inside full fracture geometry was then determined using a reduced injection rate of 3 bpm/cluster and carrier fluid viscosity of 0.01 Pa·s (10 cP), to highlight the effect of injection rate. As illustrated in FIG. 6, segregation between proppant and the soluble diverter particulates was noted for proppant sizes of 0.841 mm (20 mesh), 0.595 mm (30 mesh) and 0.420 mm (40 mesh). However, for 0.297 mm (50 mesh), no separation was noticed. Reducing proppant size to 0.210 mm (70 mesh) and 0.149 mm (100 mesh) improved proppant suspension, resulting in higher vertical proppant coverage. However this does not constitute the segregation of particles because the area occupied by the soluble diverter particulates also contained the majority of proppant.

In the third set of runs, the injection rate was left at 3 bpm/cluster but the fluid viscosity of the carrier fluid was reduced from 0.01 Pa·s to 0.002 Pa·s (10 cP to 2 cP) to highlight the effect of the viscosity of the carrier fluid. In all runs, the less viscous carrier fluid at 3 bpm/cluster was unable to place the soluble diverter particulates more than 15.24 m (50 ft) from the wellbore at a low injection rate. This indicates that the viscosity of the carrier fluid must be a minimum of 0.002 Pa·s (2 cP) in order to carry the relatively lightweight soluble diverter particulates to the far-field locations. With a fluid viscosity of 0.01 Pa·s (10 cP), the soluble diverter particulates could be carried at least about 39.62 m (130 feet) from the wellbore.

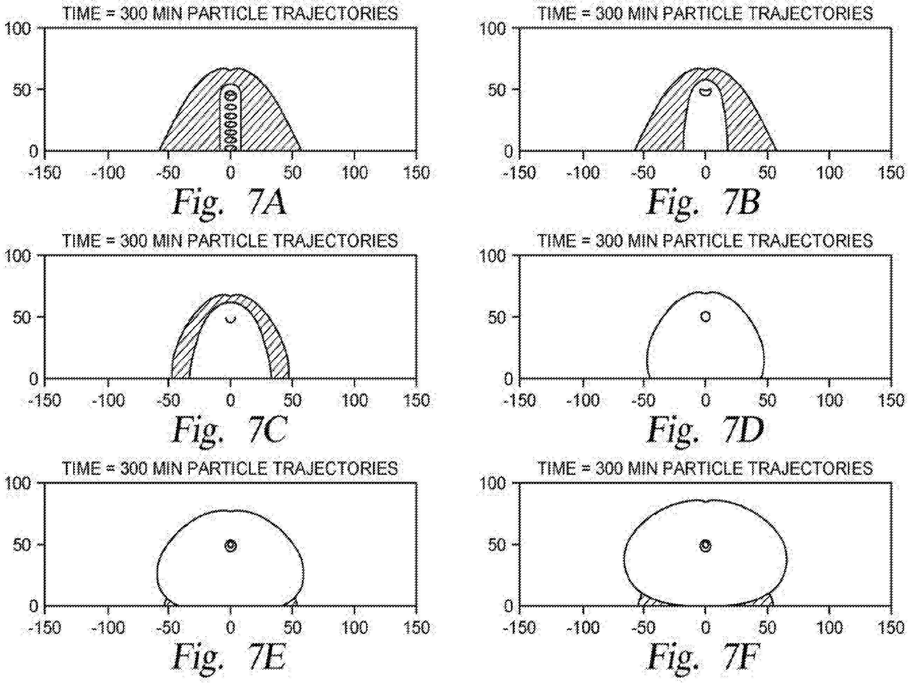

FIG. 7 shows separation between proppant and the soluble diverter particulates for proppant sizes of 0.841 mm (20 mesh), 0.595 mm (30 mesh) and 0.420 mm (40 mesh) where the proppant settled faster and closer to the wellbore area. However, for 50 mesh, no separation was noticed between the solid diverter particulates and proppant. Reducing the size of proppant to 0.210 mm (70 mesh) and 0.149 mm (100 mesh) made the proppant more transportable than the larger (0.841 mm (20 mesh)) soluble diverter particulates, increasing vertical proppant coverage. It was determined that at a low injection rate, slickwater fluid of 0.002 Pa·s (2 cP) viscosity may not be able to transport even the low density soluble diverter particles for far-field application.

FIGs. 3-7 demonstrates that proppant sizes of 0.149 mm (100 mesh) (having a particle size distribution of 0.297/0.105 mm (50/140 mesh) or 0.120/0.105 mm (70/140 mesh)) provide the lowest far-field separation between proppant and 0.841 mm (20 mesh) soluble solid particulates particles under all tested conditions. In addition, reducing the proppant size to a larger mesh number improved proppant placement in the far-field area with good vertical coverage.

Example 9. Based on the results discussed, diverter solid particulates were selected to be in the medium size range (2.00 to 0.297 mm (10 to 50 mesh)) while proppant particles were selected to be in the fine size range (finer than 0.297 mm (50 mesh) to illustrate (by conductivity reduction tests), the reduction in the flow rate due to particle pack permeability. A ceramic proppant was used having a particle distribution of 0.120/0.105 mm (70/140 mesh) wherein more than 90% of the particles were in the 0.210/0.149 mm (70/100 mesh). The ceramic proppant with 0.297 mm (50 mesh) solid particulates were able to flow through the surface equipment and downhole fracture with similar velocity.

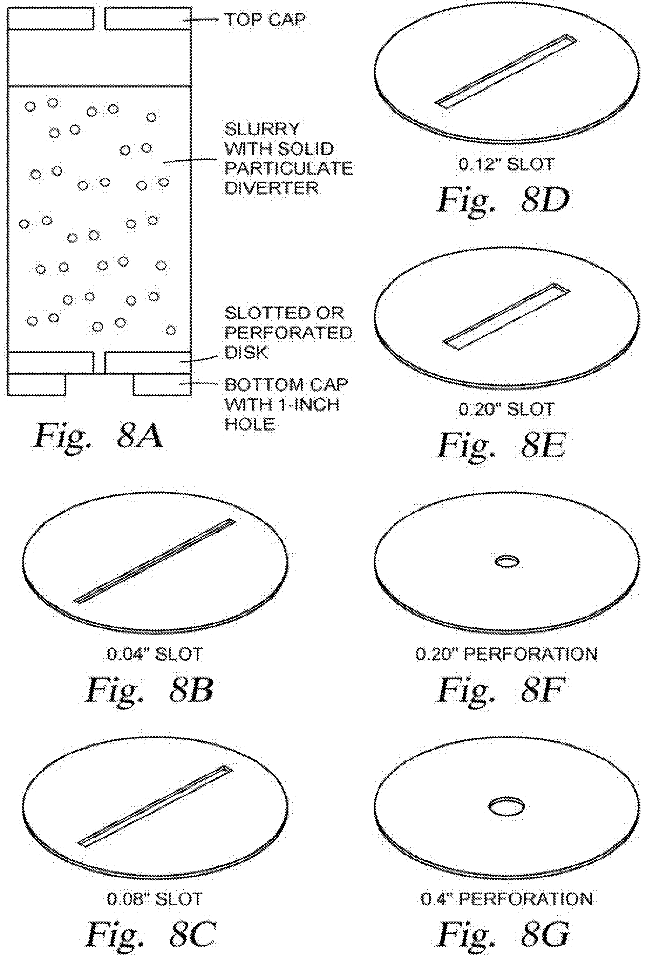

In addition, the Example illustrates the bridging capabilities of the solid particulate divers inside the fracture as a function of fracture width (1.02 to 2.03 mm (0.04 to 0.08 inches)). FIG. 8 simulates the ability of the solid diverter particulates to bridge across fractures as slots with widths ranging from 1.02 to 2.03 mm (0.04 to 0.08 in.) a viscoelastic based carrier
fluid having a viscosity of 0.2 Pa·s (200 cP) at 100 s⁻¹ to prevent settling during static condition. The slurry of carrier fluid and solid particulate diverters was injected into the cylinder where it contacted a steel disk having a slot to simulate a fracture width or a hole to simulate perforations. Until the particulates bridge across the opening in the disk, the fluid flowed out of the cylinder through a 25.40 mm (1-in.) hole which was is much larger than any of the slotted discs. The slurry with the solid diverter particulates flowed from the cell into a beaker on a balance that is connected to a data acquisition system to record the mass rate as a function of time. At the start there was no pressure and the slurry flowed only by gravity until bridging occurred. When the solid diverter particulates bridged the slot, pressure (up to 6.89 mPa (1000 psi)) was applied incrementally.

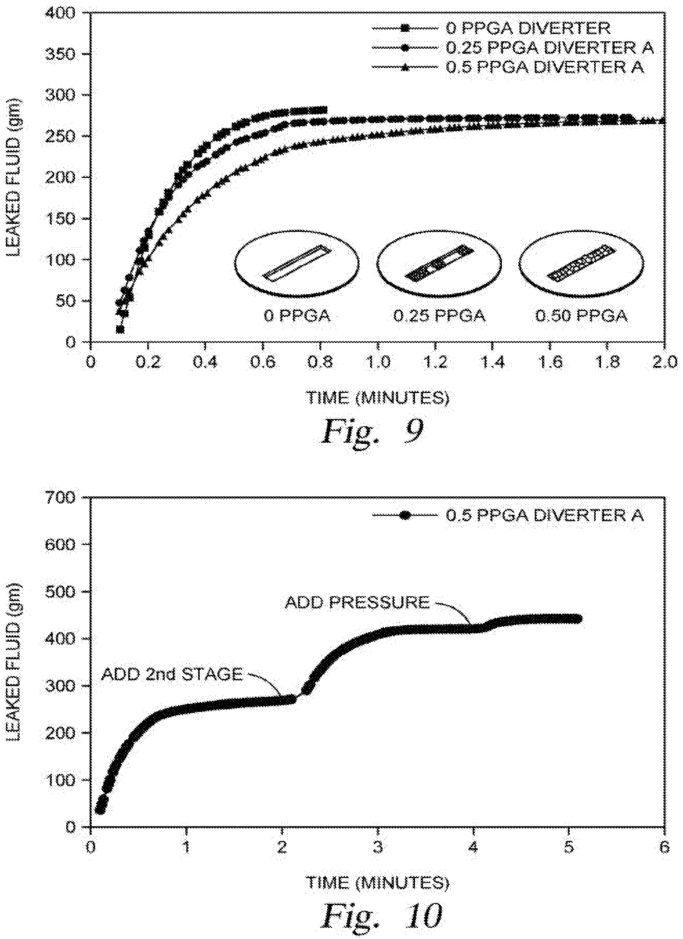

FIG. 9 demonstrates the bridging ability of Divert System A for a slot size of 1.02 mm (0.04 in.) at loadings of solid diverter particulates of 0, 0.066 and 0.13 parts per liter added (0, 0.25 and 0.5 parts per gallon added (ppga)) and the effect of concentration of the solid diverter particulates in Divert System A on fluid leaking through the slot as a function of time. No particle bridging was observed up to a loading of 0.066 parts per liter added (0.25 ppga) of Divert System A. However, for loading of 0.13 parts per liter added (0.5 ppga), the majority of the solids were located at the inlet of the slot after the particles plugged the slot.

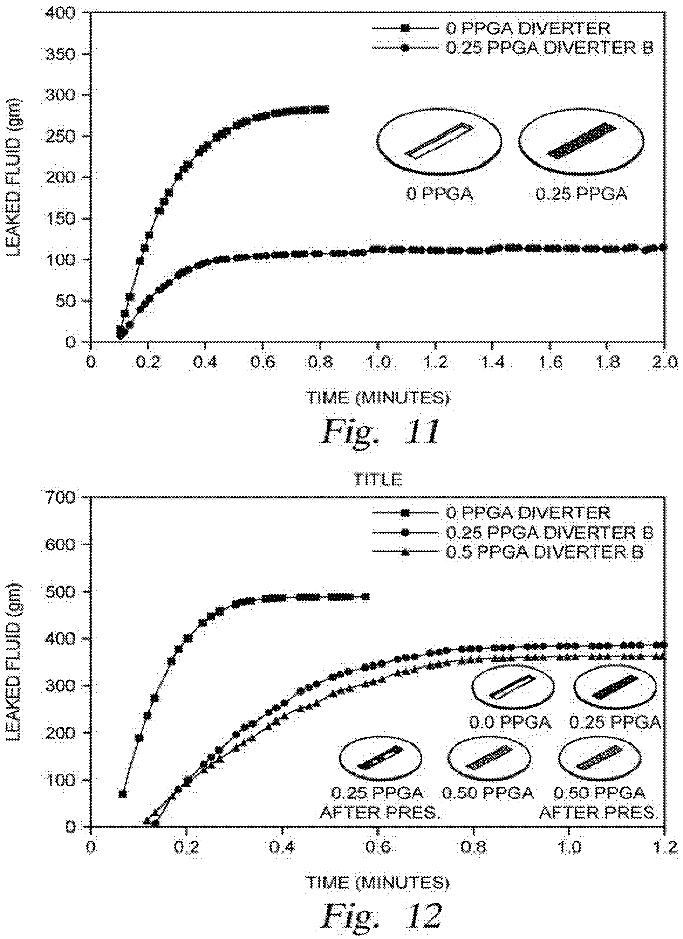

To confirm the bridging of the solid diverter particulates inside the 1.02 mm (0.04-in.) slot, a second stage of Divert System A was injected with the same loading of solid particulates of 0.13 parts per liter added (0.5 ppga) followed by increasing the pressure to 21.72 mPa/m (80 psi/in.). The effect of increasing the fluid volume and pressure on fluid leaking through the slot is illustrated in FIG. 10. After adding the second stage, leaked fluid increased by 155 g (from 265 to 420 g). This increase in fluid was less than what is noted for the first stage (265 g). By adding pressure, the fluid leak off was slightly increased to 440 g. This confirms the ability of Divert System A to bridge the 1.02 mm (0.04-in.) slot at a loading of 0.13 parts per liter added (0.5 ppga). Similar results were obtained for Diverter B. FIG. 11 illustrates the effect of concentration of the solid diverter particulates on fluid leaking through the 1.02 mm (0.04 inch) slot. For Divert System B, a loading of 0.066 parts per liter added (0.25 ppga) was enough to bridge and plug the 0.04-in slot. This indicates that the spherical shape of the solid particulates of Divert System B helps to bridge inside the fracture more than the flake shape of solid particulates of Divert System A.

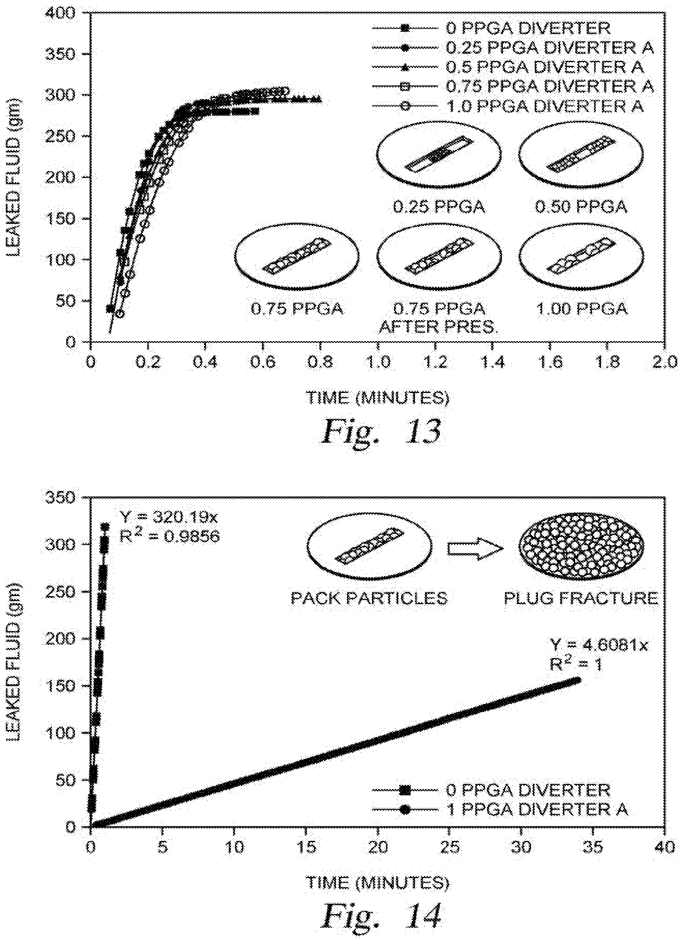

FIG. 12 shows the effect of concentration of solid diverter particulates in Divert System B on fluid leak-off as a function of time through a 2.03 mm (0.08-in.) slot width. Both 0.066 and 0.13 parts per liter added (0.25 and 0.5 ppga) loadings of the solid particulate in Divert System B were enough to bridge inside the slot and reduce the leaked fluid volume. However, if pressure was applied, only a loading of 0.13 parts per liter added (0.5 ppga) was strong enough to keep bridging inside the slot. On the other hand, the solid particulates of Divert System A were unable to bridge inside the 2.03 mm (0.08-in) slot until a loading of 0.26 parts per liter added (1 ppga) was achieved. This is illustrated in FIG. 13.

Example 10. Reduction in conductivity of Divert System A and Divert System B was used to demonstrate the ability of the systems to build a low-permeability pack that achieves diversion. Referring to FIG. 8, 1.02 mm (0.04-in.) and 2.03 mm (0.08-in.) slotted discs were used to determine the reduction in the flow rate due to the particle pack permeability. Constant injection pressure conditions from 0.69 to 6.89 mPa (100 to 1000 psi) were used. The mass flow rate was measured by recording the mass of leaked fluid as a function of time using a beaker on a balance. Oil with viscosity of 0.1 Pa·s (100 cP) (exhibiting Newtonian behavior) was initially passed through the disc without any particles to determine the baseline flow rate. Solid particles with a concentration of 0.26 parts per liter added (1 ppga) were then mixed with the VES-based carrier fluid of 0.2 Pa·s (200 cP) viscosity at 100 s⁻¹ to eliminate settling during static conditions and injected to bridge in the top of the slot disc. Oil exhibiting a viscosity of 0.1 Pa·s (100 cP) was injected through the bridged particle pack. The reduction in the oil flow rate with and without the particles pack was plotted and the reduction in conductivity was calculated. From this activity, the linear relationship between the leaked fluid and time was obtained and the slope of the line represented the conductivity of the slot. The high viscosity of the oil allowed it to flow slower, thereby increasing the accuracy of the measurements.

FIG. 14 shows a comparison in the leaked flow as a function of time through a 1.02 mm (0.04-in.) slot width where a high-viscosity oil (0.1 Pa·s (100 cP)) was pumped twice: once without the Divert System A as a baseline and a second time with Divert System (0.26 parts per liter added (1 ppga)). In both cases, a straight line was obtained between the leaked volume and the time. The slope of this line represents the conductivity of the slot. The reduction in the slope therefore from 320.19 (in the case of no Divert System A) to 4.608 (in the case of 0.26 parts per liter added (1 ppga) Divert System A), is a good indication that the diverter particulates were able to plug the fracture and reduce conductivity.

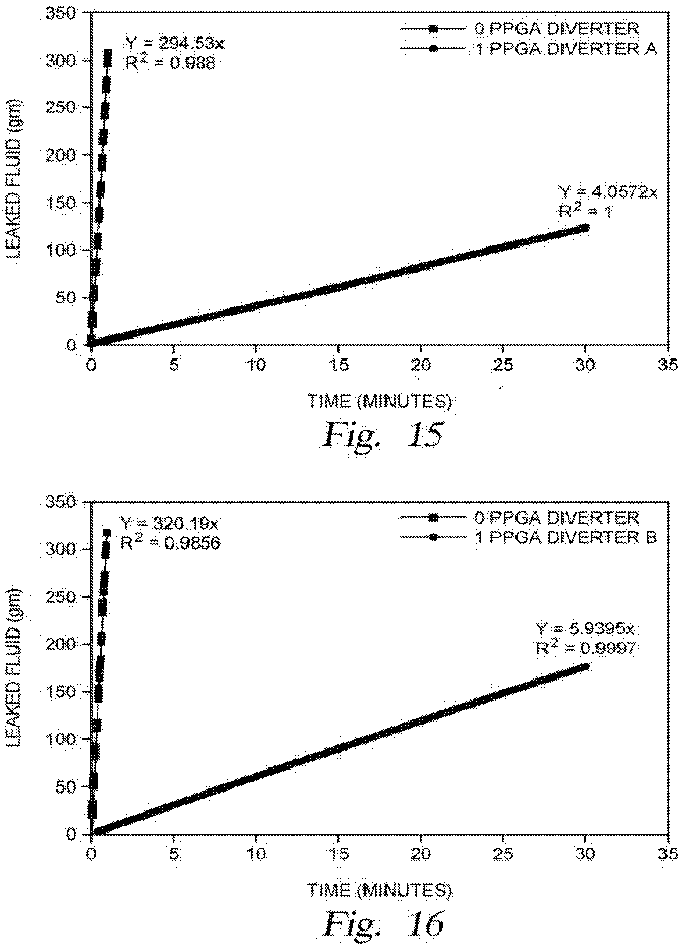

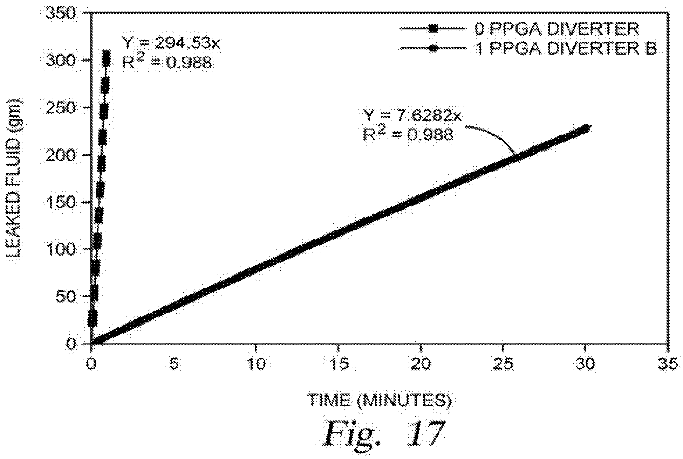

FIG. 15, FIG. 16 and FIG. 17 show similar results were obtained for Divert System A through the 2.03 mm (0.08-in.) slot, Divert System B through the 1.02 mm (0.04-in.) slot and Divert System B through the 2.03 mm (0.08-in.) slot, respectively. Table VIII shows a summary of the conductivity reduction of Divert System A and Divert System B for far-field applications with 1.02 mm (0.04-in.) and 2.03 mm (0.08-in.) slot widths.

**Table VIII**

| Type | Slot Width | Concentration, parts per liter added | Conductivity Reduction, % |
|---|---|---|---|
| Diverter A | 0.04 in. (1 mm) | 0.26 (1 ppga) | 98.6 |
| Diverter B | 0.04 in. (1 mm) | 0.26 (1 ppga) | 98.1 |
| Diverter A | 0.08 in. (2 mm) | 0.26 (1 ppga) | 98.6 |
| Diverter B | 0.08 in. (2 mm) | 0.26 (1 ppga) | 97.4 |

In summary, Examples 8 and 9 demonstrate that the mixture of soluble solid particles and proppant as defined ensure in far field diversion that the temporarily bridged fractures re-open and remain propped for hydrocarbon flow after the soluble material has fully dissolved. In particular, the data supports the conclusions that (i) proppant size of 0.297 mm (50 mesh) or higher minimized the far-field segregation between the proppant and 0.841 mm (20 mesh) soluble particles; (ii) reduction in proppant size to a larger mesh improved proppant placement inside the far-field area with good vertical coverage; the diverter particulates should be in the medium-size range (2.00 to 0.297 mm (10 to 50 mesh)) while the proppant particles should be in the fine-size range (0.210 to 0.105 mm (70 to 140 mesh)); (iii) at low injection rates, slickwater fluid (0.002 Pa·s (2 cP)) may not have adequate transport properties to place soluble diverter particles for far-field applications; (iv) carrier fluid with viscosity of 0.01 Pa·s (10 cP) carries the soluble diverter particulates and the proppant at least 39.62 m (130 ft.) from the wellbore; (v) a loading of 0.13 parts per liter added (0.5 ppga) of Divert System A was needed to bridge and plug the 1.02 mm (0.04-in.) slot width, while only 0.066 parts per liter added (0.25 ppga) of Divert System B was needed to plug the same width; (vi) the spherical shape of the particulates of Divert System B helped to bridge inside the 1.02 mm (0.04-in.) fracture more than the flake shape of the particulates of Divert System A; and (vii) both Divert System A and Divert System B were able to significantly reduce the conductivity of the test slot discs.

The methods that may be described above or claimed herein and any other methods which may fall within the scope of the appended claims can be performed in any desired suitable order and are not necessarily limited to any sequence described herein or as may be listed in the appended claims. Further, the methods of the present disclosure do not necessarily require use of the particular embodiments shown and described herein, but are equally applicable with any other suitable structure, form and configuration of components.

While exemplary embodiments of the disclosure have been shown and described, many variations, modifications and/or changes of the system, apparatus and methods of the present disclosure, such as in the components, details of construction and operation, arrangement of parts and/or methods of use, are possible, contemplated by the patent applicant(s), within the scope of the appended claims, and may be made and used by one of ordinary skill in the art without departing from teachings of the disclosure and scope of appended claims. Thus, all matter herein set forth or shown in the accompanying drawings should be interpreted as illustrative, and the scope of the disclosure and the appended claims should not be limited to the embodiments described and shown herein.

## Claims

1. A method of stimulating the production of hydrocarbons from a subterranean formation penetrated by a wellbore, the method comprising:
a) flowing an aqueous fluid having minimum viscosity of 0.002 Pa·s (2 cP) into a high permeability zone of a fracture within a subterranean formation located from 3.1 m to 914.4 m (10 to 3,000 feet) from the wellbore or a perforation tunnel, the aqueous fluid having a divert system comprising (i) dissolvable diverter particulates having a particle size from 4.760 mm to 0.297 mm (4 to 50 mesh) and (ii) proppant having a particle size range between from 0.420 mm to 0.044 mm (40 to 325 mesh) and an apparent specific gravity greater than or equal to 1.05;
b) propping open at least a portion of the high permeability zone with at least a portion of the proppant in the divert system and blocking at least a portion of the high permeability zone with at least a portion of the diverter particulates;
c) pumping a fluid into the subterranean formation and into a lower permeability zone of the fracture;
d) dissolving at least a portion of the diverter particulates blocking at least a portion of the high permeability zone; and
e) producing hydrocarbons from the high permeability zone and the lower permeability zone.

2. The method of claim 1, wherein:
the downhole temperature of the wellbore is between from 26.7 °C (80°F) to 204.4 °C (400°F);
the weight ratio of the diverter particulates to proppant in the divert system is from 5:95 to 95:5; or
the subterranean formation is sandstone or carbonate.

3. The method of claim 1, wherein the apparent density of the dissolvable diverter particulates is greater than or equal to 1.2 g/cc.

4. The method of claim 1, wherein the apparent specific gravity of the proppant is greater than or equal to 2.60.

5. The method of claim 4, wherein the proppant is sand or a porous ceramic.

6. The method of claim 1, wherein the fluid of step (c) contains a proppant having an apparent specific gravity greater than or equal to 1.05.

7. The method of claim 1, wherein the fluid of step (c) further contains a dissolvable diverter.

8. The method of claim 7, wherein the diverter particulates of the divert system and the dissolvable diverter of step (c) are of the same composition.

9. The method of claim 1, wherein at least a portion of the diverter particulates of the divert system comprise at least one compound of the formula: 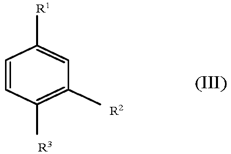 or an anhydride thereof wherein:
R¹ is -COO-(R⁵O)_{y}-R⁴ or -H;
R² and R³ are selected from the group consisting of -H and -COO-(R⁵O)_{y}-R⁴;
provided both R² or R³ are -COO-(R⁵O)_{y}-R⁴ when R¹ is -H and
further provided only one of R² or R³ is -COO-(R⁵O)_{y}-R⁴ when R¹ is -COO-(R⁵O)_{y}-R⁴ R⁴ is -H or a C₁-C₆ alkyl group;
R⁵ is a C₁-C₆ alkylene group; and
each y is 0 to 5.

10. The method of claim 9, wherein at least a portion of the diverter particulates of the divert system are phthalic anhydride.

11. The method of claim 9, wherein the downhole temperature of the wellbore is between from 26.7 °C (80 °F) to 121.1 °C (250 °F).

12. The method of claim 9, wherein the diverter particulates of the divert system further comprise an aliphatic polyester having the general formula of repeating units: 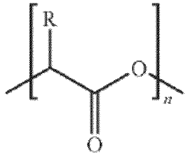 where n is an integer between 75 and 10,000 and R is selected from the group consisting of hydrogen, alkyl, aryl, alkylaryl, acetyl, heteroatoms, and mixtures thereof.

13. The method of claim 12, wherein the aliphatic polyester is polylactic acid.

14. The method of claim 1, wherein at least a portion of the diverter particulates comprise an aliphatic polyester having the general formula of repeating units: 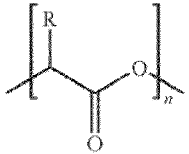 where n is an integer between 75 and 10,000 and R is selected from the group consisting of hydrogen, alkyl, aryl, alkylaryl, acetyl, heteroatoms, and mixtures thereof.

15. The method of claim 14, wherein the at least a portion of the diverter particulates is polylactic acid.

## Patentansprüche

1. Verfahren zum Stimulieren der Erzeugung von Kohlenwasserstoffen von einer subterranen Formation die durch ein Bohrloch durchdrungen wird, das Verfahren umfassend:
a) Einfließenlassen eines wässrigen Fluids, das eine Mindestviskosität von 0,002 Pa·s (2 cP) aufweist, in eine Zone hoher Permeabilität eines Risses innerhalb einer subterranen Formation, die sich von 3,1 m bis 914,4 m (10 bis 3.000 Fuß) von dem Bohrloch oder einem Perforationstunnel entfernt befindet, wobei das wässrige Fluid ein Ablenksystem aufweist, umfassend (i) auflösbare Ablenkerteilchen, die eine Teilchengröße von 4,760 mm bis 0,297 mm (4 bis 50 Mesh) aufweisen, und (ii) ein Stützmittel, das einen Teilchengrößenbereich zwischen 0,420 mm und 0,044 mm (40 bis 325 Mesh) und eine scheinbare spezifische Dichte von größer als oder gleich 1,05 aufweist;
b) Offenhalten mindestens eines Abschnitts der Zone hoher Permeabilität mit mindestens einem Abschnitt des Stützmittels in dem Ablenksystem und Blockieren mindestens eines Abschnitts der Zone hoher Permeabilität mit mindestens einem Abschnitt der Ablenkerteilchen;
c) Pumpen eines Fluids in die subterrane Formation und in eine Zone geringerer Permeabilität des Risses;
d) Auflösen mindestens eines Abschnitts der Ablenkerteilchen, die mindestens einen Abschnitt der Zone hoher Permeabilität blockieren; und
e) Erzeugen von Kohlenwasserstoffen aus der Zone hoher Permeabilität und der Zone geringerer Permeabilität.

2. Verfahren nach Anspruch 1, wobei:
die Untertagetemperatur des Bohrlochs zwischen 26,7 °C (80 °F) und 204,4 °C (400 °F) liegt;
das Gewichtsverhältnis der Ablenkerteilchen zu Stützmittel in dem Ablenksystem von 5 : 95 bis 95 : 5 beträgt; oder
die subterrane Formation Sandstein oder Carbonat ist.

3. Verfahren nach Anspruch 1, wobei die scheinbare Dichte der auflösbaren Ablenkerteilchen größer als oder gleich 1,2 g/cm³ ist.

4. Verfahren nach Anspruch 1, wobei die scheinbare spezifische Dichte des Stützmittels größer als oder gleich 2,60 ist.

5. Verfahren nach Anspruch 4, wobei das Stützmittel Sand oder eine poröse Keramik ist.

6. Verfahren nach Anspruch 1, wobei das Fluid aus Schritt (c) ein Stützmittel enthält, das eine scheinbare spezifische Dichte größer als oder gleich 1,05 aufweist.

7. Verfahren nach Anspruch 1, wobei das Fluid aus Schritt (c) ferner einen auflösbaren Ablenker enthält.

8. Verfahren nach Anspruch 7, wobei die Ablenkerteilchen des Ablenksystems und der auflösbare Ablenker aus Schritt (c) von der gleichen Zusammensetzung sind.

9. Verfahren nach Anspruch 1, wobei mindestens ein Abschnitt der Ablenkerteilchen des Ablenksystems mindestens eine Verbindung der Formel umfasst: 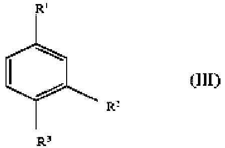 oder ein Anhydrid davon, wobei:
R¹ -COO-(R⁵O)_{y}-R⁴ oder -H ist;
R² und R³ aus der Gruppe ausgewählt sind, bestehend aus -H und -COO-(R⁵O)_{y}-R⁴;
mit der Maßgabe, dass sowohl R² oder R³ -COO-(R⁵O)_{y}-R⁴ sind, wenn R¹ -H ist, und
ferner mit der Maßgabe, dass nur eines von R² oder R³ -COO-(R⁵O)_{y}-R⁴ ist, wenn R¹ -COO-(R⁵O)_{y}-R⁴ ist
R⁴ -H oder eine C₁-C₆-Alkylgruppe ist;
R⁵ eine C₁-C₆-Alkylengruppe ist; und
jedes y 0 bis 5 ist.

10. Verfahren nach Anspruch 9, wobei mindestens ein Abschnitt der Ablenkerteilchen des Ablenksystems Phthalsäureanhydrid ist.

11. Verfahren nach Anspruch 9, wobei die Untertagetemperatur des Bohrlochs zwischen 26,7 °C (80 °F) und 121,1 °C (250 °F) liegt.

12. Verfahren nach Anspruch 9, wobei die Ablenkerteilchen des Ablenksystems ferner einen aliphatischen Polyester umfassen, der die allgemeine Formel von Wiederholungseinheiten aufweist: 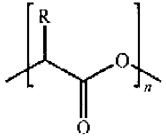 wobei n eine ganze Zahl zwischen 75 und 10.000 ist und R aus der Gruppe ausgewählt ist, bestehend aus Wasserstoff, Alkyl, Aryl, Alkylaryl, Acetyl, Heteroatomen und Mischungen davon.

13. Verfahren nach Anspruch 12, wobei der aliphatische Polyester Polymilchsäure ist.

14. Verfahren nach Anspruch 1, wobei mindestens ein Abschnitt der Ablenkerteilchen einen aliphatischen Polyester umfasst, der die allgemeine Formel von Wiederholungseinheiten aufweist: 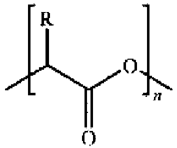 wobei n eine ganze Zahl zwischen 75 und 10.000 ist und R aus der Gruppe ausgewählt ist, bestehend aus Wasserstoff, Alkyl, Aryl, Alkylaryl, Acetyl, Heteroatomen und Mischungen davon.

15. Verfahren nach Anspruch 14, wobei der mindestens eine Abschnitt der Ablenkerteilchen Polymilchsäure ist.

## Revendications

1. Procédé permettant de stimuler la production d'hydrocarbures à partir d'une formation souterraine pénétrée par un trou de forage, le procédé comprenant :
a) l'écoulement d'un fluide aqueux ayant une viscosité minimale de 0,002 Pa·s (2 cP) dans une zone à haute perméabilité d'une fracture à l'intérieur d'une formation souterraine située de 3,1 m à 914,4 m (10 à 3 000 pieds) du trou de forage ou d'un tunnel de perforation, le fluide aqueux ayant un système de déviation comprenant (i) des matières particulaires de déviation solubles ayant une taille de particule allant de 4,760 mm à 0,297 mm (4 à 50 mesh) et (ii) un agent de soutènement ayant une plage de tailles de particules comprise entre 0,420 mm et 0,044 mm (40 à 325 mesh) et une densité relative apparente supérieure ou égale à 1,05 ;
b) le soutènement d'au moins une partie de la zone à haute perméabilité avec au moins une partie de l'agent de soutènement dans le système de déviation et le blocage d'au moins une partie de la zone à haute perméabilité avec au moins une partie des matières particulaires de déviation ;
c) le pompage d'un fluide dans la formation souterraine et dans une zone à perméabilité inférieure de la fracture ;
d) la dissolution d'au moins une partie des matières particulaires de déviation bloquant au moins une partie de la zone à haute perméabilité ; et
e) la production d'hydrocarbures à partir de la zone à haute perméabilité et de la zone à perméabilité inférieure.

2. Procédé selon la revendication 1, dans lequel :
la température de fond de trou du trou de forage est comprise entre 26,7 °C (80 °F) et 204,4 °C (400 °F) ;
le rapport pondéral des matières particulaires de déviation à l'agent de soutènement dans le système de déviation va de 5:95 à 95:5 ; ou
la formation souterraine est du grès ou du carbonate.

3. Procédé selon la revendication 1, dans lequel la densité apparente des matières particulaires de déviation solubles est supérieure ou égale à 1,2 g/cm³.

4. Procédé selon la revendication 1, dans lequel la densité relative apparente de l'agent de soutènement est supérieure ou égale à 2,60.

5. Procédé selon la revendication 4, dans lequel l'agent de soutènement est du sable ou une céramique poreuse.

6. Procédé selon la revendication 1, dans lequel le fluide de l'étape (c) contient un agent de soutènement ayant une densité relative apparente supérieure ou égale à 1,05.

7. Procédé selon la revendication 1, dans lequel le fluide de l'étape (c) contient en outre un agent de déviation soluble.

8. Procédé selon la revendication 7, dans lequel les matières particulaires de déviation du système de déviation et l'agent de déviation soluble de l'étape (c) sont de la même composition.

9. Procédé selon la revendication 1, dans lequel au moins une partie des matières particulaires de déviation du système de déviation comprennent au moins un composé de formule : 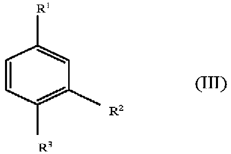 ou un anhydride de celui-ci, où :
R¹ est -COO-(R⁵O)_{y}-R⁴ ou -H ;
R² et R³ sont choisis dans le groupe constitué de -H et -COO-(R⁵O)_{y}-R⁴ ;
à condition que R² ou R³ soient tous deux -COO-(R⁵O)_{y}-R⁴ lorsque R¹ est -H, et
à condition en outre qu'un seul parmi R² ou R³ soit -COO-(R⁵O)_{y}-R⁴ lorsque R¹ est -COO-(R⁵O)_{y}-R⁴
R⁴ est -H ou un groupe alkyle en C₁-C₆ ;
R⁵ est un groupe alkylène en C₁-C₆ ; et
chaque y va de 0 à 5.

10. Procédé selon la revendication 9, dans lequel au moins une partie des matières particulaires de déviation du système de déviation sont de l'anhydride phtalique.

11. Procédé selon la revendication 9, dans lequel la température de fond de trou du trou de forage est comprise entre 26,7 °C (80 °F) et 121,1 °C (250 °F).

12. Procédé selon la revendication 9, dans lequel les matières particulaires de déviation du système de déviation comprennent en outre un polyester aliphatique ayant la formule générale d'unités de répétition : 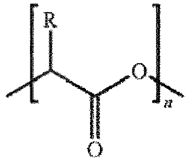 où n est un nombre entier compris entre 75 et 10 000 et R est choisi dans le groupe constitué d'hydrogène, alkyle, aryle, alkylaryle, acétyle, hétéroatomes, et mélanges de ceux-ci.

13. Procédé selon la revendication 12, dans lequel le polyester aliphatique est un acide polylactique.

14. Procédé selon la revendication 1, dans lequel au moins une partie des matières particulaires de déviation comprennent un polyester aliphatique ayant la formule générale d'unités de répétition : 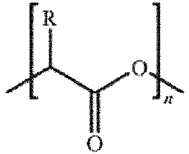 où n est un nombre entier compris entre 75 et 10 000 et R est choisi dans le groupe constitué d'hydrogène, alkyle, aryle, alkylaryle, acétyle, hétéroatomes, et mélanges de ceux-ci.

15. Procédé selon la revendication 14, dans lequel l'au moins une partie des matières particulaires de déviation est de l'acide polylactique.
